# EUROPEAN PATENT APPLICATION

(11) **EP 3 605 429 A1**
(43) Date of publication of application: **05.02.2020**
(21) Application number: 18777695.0
(22) Date of filing: 19.03.2018
(51) Int. Cl.: G06Q 30/06, G05B 19/418, G06Q 10/06, G06Q 50/04

(54) **COMPONENT PROCUREMENT ASSISTANCE SYSTEM, COMPONENT PROCUREMENT ASSISTANCE METHOD, AND PROGRAM**

(30) Priority: 28.03.2017 JP 2017063340
(71) Applicant: Hitachi High-Technologies Corporation, Tokyo 105-8717 (JP)
(72) Inventor: MUKOH, Masaki, Tokyo 105-8717 (JP); TADA, Nobuyoshi, Tokyo 105-8717 (JP); NOGUCHI, Minori, Tokyo 105-8717 (JP); TAKAHASHI, Masumi, Tokyo 105-8717 (JP)
(74) Representative: Strehl Schübel-Hopf & Partner
(86) International application number: PCT/JP2018/010846
(87) International publication number: WO 2018/180717

(57) **Abstract**

In order to assist in the selection of related vendors and the determination of arrangements related to component procurement, for each of multiple types of manufacturing process candidates satisfying specification conditions for a procured component, this system estimates and displays a delivery period and cost information for the procured component, on the basis of delivery period and cost information for materials that can be supplied by each material supply facility, and delivery period and cost information for each processed element that can be supplied by each processing supply facility.

## Description

### TECHNICAL FIELD

The present invention pertains to a component procurement assistance system, a component procurement assistance method and a program, which enable assistance of related traders concerning procurements of components in terms of determining selections and arrangements.

### BACKGROUND ART

Conventionally, in transactions between enterprises concerning the procurement of components building up products, procurements and arrangements are made based on specifications of components. A trader procuring the component (who will hereinafter be also termed a "component user") properly selects a raw material (material) constituting the component and a process method, and makes the arrangements for the procurement by designating a delivery destination of the component. When a provider that provides the raw material (hereinafter also referred to as a "raw material maker") and a provider that provides a process of the raw material (hereinafter also referred to as a "process facility") are different, the component user needs to make an arrangement for purchasing the raw material from the raw material maker, and an arrangement for the processing with respect to the process facility. The component user also needs to make an arrangement for delivery to the process facility from the raw material maker, and an arrangement for the delivery to a recipient of the component from the process facility. A procurement target component requires multi-stage processing, in which case the arrangement for the delivery is required per processing.

Note that the following patent documents exist as documents of the prior arts, which embrace descriptions of technologies pertaining to technologies described in the present specification.

### [Documents of Prior Arts]

### [Patent Documents]

[Patent Document 1] Japanese Patent Application Laid-Open Publication No. 2011-48667
[Patent Document 2] Japanese Patent Application Laid-Open Publication No. 2009-129393

### SUMMARY OF THE INVENTION

### [Problems to be solved by the Invention]

By the way, there are various types of finished products using the components, and such a case exists that a special component not normally dealt with becomes the procurement target component. Depending on circumstances of the component users, there are such cases as to make procurements emphasizing a delivery date, emphasizing a cost and emphasizing performance of the component with respect to the procurements of the components.

The component user is required to determine a variety of arrangements concerning the procurements of components by properly selecting candidate traders capable of corresponding to the respective above-mentioned cases from within a plurality of raw material makers, a plurality of process facilities and a plurality of logistics companies, depending on the circumstances. However, the selections and the arrangements of the candidate traders in the related traders concerning the procurement of components are time-consuming, and a total cost (time and expense) increases relatively because of a small amount of information about a situation of correspondence (process past record) between the raw material maker and the process facility.

It is an object of the present invention, which was devised in view of such circumstances, to provide a technology enabling assistance for determining a selection and an arrangement of a related trader concerning a procurement of component.

### [Means for solving the Problems]

The present invention is exemplified as a component procurement assistance system.

The component procurement assistance system includes storage means to store information for specifying a component, information for specifying a material of the component, process information for specifying a processing process to process the material into the component by one or more process elements, information of a material providing facility to provide the material of the component, information of a process providing facility to make feasible a process element contained in the processing process, and transaction past record information of the component.

The component procurement assistance system further includes means to accept a specification condition of a procurement target component; means to acquire plural types of processing processes of processing a material satisfying the specification condition of the procurement component into the procurement component as manufacturing process candidates from the process information; means to specify the material providing facility to provide the material and the process providing facility to make feasible the process element by being associated with respective process elements contained in the plural types of acquired manufacturing process candidates, based on the material providing facility information and the process providing facility information; means to estimate a delivery date of the procurement component and cost information per plural types of manufacturing process candidates, based on the delivery date and the cost information set in the material providing facility of the material and the delivery date and the cost information set in the process providing facility per the process elements; and presenting means to present the delivery date the cost information of the procurement component, the delivery date and the cost information being estimated per the plural types of manufacturing process candidates.

According to the configuration described above, the component user browses procurement plans presented on, e.g., a display screen, and is thereby enabled to determine procurement expenses, delivery dates and other equivalent items associated with a plurality of presented component procurement candidates, and to select a desired component procurement destination. According to the present invention, it is feasible to provide a one-stop service for assisting the determination about the selections and the arrangements of the plurality of related traders concerning the procurements of components. According to the present invention, it is feasible to assist the selections and the arrangements of the related traders concerning the procurements of components.

In the present invention, the presenting means may acquire at least a transaction past record count of the process providing facility per process element contained in the plural types of manufacturing process candidates from the transaction past record information, may sort the process providing facilities in the sequence from the largest transaction past record count acquired therefrom, and may present the delivery date and the cost information of each manufacturing process candidate. According to this configuration, the component user is enabled to determine the selections and the arrangements of the related traders concerning the procurements of components on the basis of how much the transaction past records are large or small.

In the present invention, the presenting means may sort the plural types of manufacturing process candidates in the sequence from the shortest delivery date from within the procurement component delivery date and the procurement component cost information estimated per plural types of manufacturing process candidates, and may present the delivery date and the cost information of each manufacturing process candidate. The presenting means may sort the plural types of manufacturing process candidates in the sequence from the lowest cost from within the procurement component delivery date and the procurement component cost information estimated per plural types of manufacturing process candidates, and may present the delivery date and the cost information of each manufacturing process candidate. The component user is enabled to determine the selections and the arrangements of the related traders concerning the procurements of components on the basis of how much the delivery date is long or short and how much the cost is high or low.

In the present invention, the presenting means may acquire at least the transaction past record count per process element contained in the plural types of manufacturing process candidates from the transaction past record information stored in the storage means, and may present in parallel the delivery date and the cost information of the manufacturing process candidate with the largest transaction past record count acquired therefrom, the delivery date and the cost information of the manufacturing process candidate with the shortest delivery date from within the procurement component delivery date and the procurement component cost information estimated per plural types of manufacturing process candidates, and the delivery date and the cost information of the manufacturing process candidate with the lowest cost from within the procurement component delivery date and the procurement component cost information estimated per plural types of manufacturing process candidates. According to this configuration, the component user relatively compares information contents (transaction past record, delivery date and cost) presented in respective plans, and is thereby enabled to determine the selections and the arrangements of the related traders concerning the procurements of components on the basis of the desirable presented information.

It should be noted that the present invention may be specified as a component procurement assistance system including at least part of the processes and the means described above. The processes and the means may be combined without any restrictions and carried out, as far as any technical contradictions do not arise.

### [Effect of the Invention]

According to the present invention, it is feasible to provide the technology enabling the assistance for determining the selection and the arrangement of the related trader concerning the procurement of component.

### BRIEF DESCRIPTION OF THE DRAWINGS

FIG. 1 is a diagram illustrating one example of a configuration of a component procurement assistance system according to an embodiment.
FIG. 2 is a diagram illustrating one example of a hardware configuration of a computer.
FIG. 3 is a diagram illustrating one example of process information of a raw material process DB.
FIG. 4 is a diagram illustrating one example of the process information of the raw material process DB.
FIG. 5 is a diagram illustrating one example of the process information of the raw material process DB.
FIG. 6 is a diagram illustrating one example of a search result of component information of the raw material process DB.
FIG. 7 is a diagram illustrating one example of a procurement candidate list.
FIG. 8 is a diagram illustrating one example of raw material information of the raw material process DB.
FIG. 9 is a diagram illustrating one example of facility information of the raw material process DB.
FIG. 10 is a diagram illustrating one example of a correlation table.
FIG. 11 is an explanatory diagram illustrating a cost and a delivery date concerning the procurement of components.
FIG. 12 is a diagram illustrating one example of an area-by-area freight charge table for a small-volume delivery.
FIG. 13 is a diagram illustrating one example of a size-by-size charge table for transportation packages.
FIG. 14 is a data flowchart in the case of utilizing a large-volume delivery service.
FIG. 15 is a diagram illustrating one example of a component procurement assistance table.
FIG. 16 is a diagram illustrating one example of the component procurement assistance table.
FIG. 17 is a diagram illustrating one example of a form for presenting a plurality of component procurement plans as options.
FIG. 18 is a diagram illustrating one example of a graph in which to visualize the cost and the delivery date of the component procurement plan.
FIG. 19 is a diagram illustrating one example of a written estimate.
FIG. 20 is a diagram illustrating one example of the written estimate.
FIG. 21 is a diagram illustrating one example of the written estimate.
FIG. 22 is a flowchart illustrating one example of a procurement assistance process of the component according to the embodiment.

### DESCRIPTION OF EMBODIMENTS

A component procurement assistance system according to one embodiment will hereinafter be described with reference to drawings. A configuration of the following embodiment is an exemplification, and the present component procurement assistance system is not limited to the configuration of the embodiment.

### <1. System Configuration>

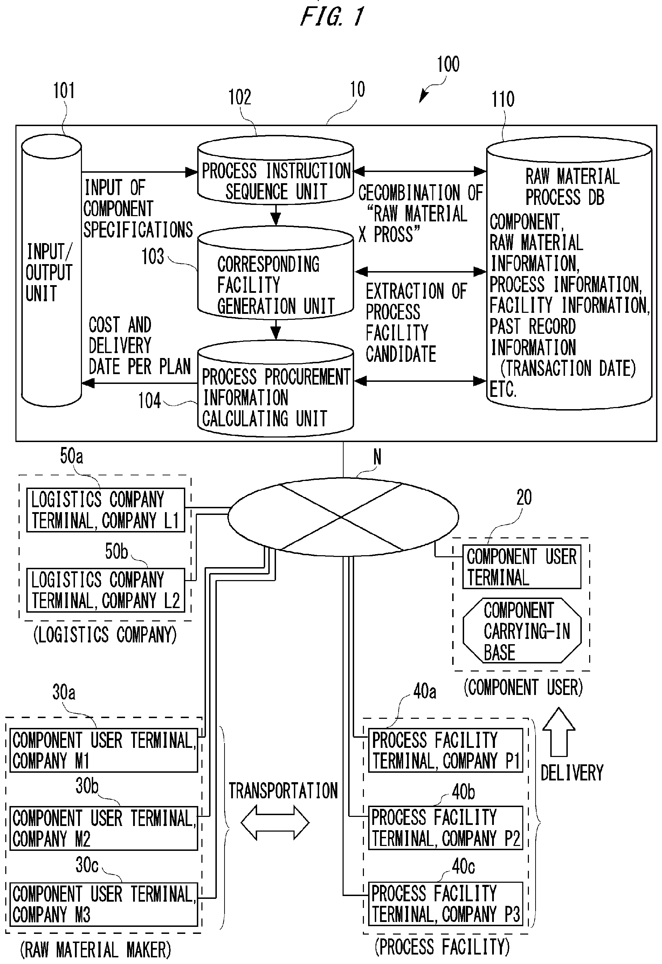

FIG. 1 is a diagram illustrating a configuration of a component procurement assistance system 100 according to the embodiment. Such a case exists that traders for assisting the transactions (who will hereinafter be also termed "assistance traders") between the component users and the related traders get involved in the procurements of components so as to smoothly perform the transactions between the component users and the related traders (raw material makers, process facilities, and delivery traders) concerning the procurements of components.

The assistance traders are intermediary agents exemplified by trading companies, agents and wholesalers. However, an affiliated company of the component user, or one division of the component user, or a collaborative organization organized by a plurality of component users functions as the assistance trader as the case may be. Further, an affiliated company of the raw material maker, or one division of the raw material maker, or a collaborative organization organized by a plurality of raw material makers functions as the assistance trader as the case may be. Still further, an affiliated company of the process facility, or one division of the process facility, or a collaborative organization organized by a plurality of process facilities functions as the assistance trader as the case may be. Yet further, a collaborative organization organized by any traders within the component users, the raw material makers and the process facilities functions as the assistance trader as the case may be.

In the component procurement assistance system 100 illustrated in FIG. 1, a procurement assistance server 10 is a computer used by the assistance trader. The assistance trader assists administers an EC (Electronic Commerce) including the procurement assistance server 10, and assists the component users to determine the selections of the related traders (the raw material makers, the process facilities, and the delivery traders) concerning the procurements of components and to make the arrangements thereof.

The procurement assistance server 10 includes, at least, a raw material process database (DS) 110. The procurement assistance server 10 provides, at least, information processing functions of an input/output unit 101, a process instruction sequence unit 102, a corresponding facility generation unit 103 and a process procurement information calculating unit 104. The procurement assistance server 10 may, however, be a single computer, and may also be an aggregation of the plural computers, e.g., a system called "Cloud". Similarly, the raw material process DS 110 may be built up by a single database server or a plurality of database servers.

In the component procurement assistance system 100, the procurement assistance server 10 connects to a network N. The network N includes a public network instanced by the Internet, a wireless network instanced by a mobile phone network, a private network instanced by VPN (Virtual Private Network), and a network instanced by LAN (Local Area Network).

Connected to the network N are a component user terminal 20 possessed by the component user, and raw material maker terminals 30a, 30b, 30c possessed by the raw material makers defined as procurement candidates. Connected likewise to the network N are process facility terminals 40a, 40b, 40c possessed by the process facilities defined as the procurement candidates, and delivery trader terminals 50a, 50b possessed by the delivery traders. Note that a plurality of unillustrated terminals possessed by the raw material makers as the procurement candidates, the process facilities as the procurement candidates and the delivery trader, are connectable to the network N. In the following discussion, the raw material maker terminals 30a, 30b, 30c will hereinafter be generically termed the "raw material maker terminal 30", the process facility terminals 40a, 40b, 40c will hereinafter be generically termed the "process facility terminal 40", and the delivery trader terminals 50a, 50b will hereinafter be generically termed the "delivery trader terminal 50".

The component user is a trader that develops and manufactures a variety of products by using the procured components, and sells the products . The component user is an enterprise operating businesses in business fields of, e.g., civil engineering, building construction, machine, consumer electronics, office appliances and various components (machine components, electric components and electronic components).

The component user includes the component user terminal 20 used by, e.g., personnel, an employee and other equivalent person of the trader defined as the component user. The component user terminal 20 is an information processing apparatus exemplified by PC (Personal Computer), WS (Workstation) and a server. The component user makes the arrangements for the procurements on the basis of specifications of procurement target components via the component user terminal 20.

The raw material maker is a trader to provide the component user with the raw materials. The raw material maker supplies the raw materials called, e.g., inorganic materials and metals instanced by iron, steel or steel products in the form of bar stocks, powders, plate materials and other equivalent forms. The steel or the steel product includes an alloy, e.g., stainless steel (SUS).

The raw material maker includes the raw material maker terminal 30 instanced by the PC and the server, the terminal 30 being used by the personnel, the employee and other equivalent person of the trader defined as the raw material maker. The raw material maker accepts an instruction to procure the raw material via the raw material maker terminal 30. FIG. 1 illustrates the raw material maker terminal 30a possessed by a raw material maker M1 serving as the procurement candidate, the raw material maker terminal 30b possessed by a raw material maker M2 serving as the procurement candidate, and the raw material maker terminal 30c possessed by a raw material maker M3 serving as the procurement candidate.

The process facility is a trader that provides "processing" to the raw material. However, an affiliated company of the raw material maker, or one division of the raw material maker, or a collaborative organization organized by the plurality of raw material makers functions as the process facility as the case may be. Further, an affiliated company of the component user, or one division of the component user, or a collaborative organization organized by the plurality of component users functions as the process facility as the case may be.

The process facility provides the processing such as cutting, casting, molding, forging, machining, polishing, embossing, plating and frosting the raw material. These individual elements of processing are also termed "process elements". Note that the procurement target component requires multi-staged process elements, in which case the procurement target component is provided through cooperation of the plurality of process facilities per step of the process element. Herein, a combination of the process elements for obtaining the component from the material is called a "manufacturing process". The combination of the process elements presented by the procurement assistance server 10 according to the embodiment may also be said to be a "manufacturing process candidate".

The process facility includes the process facility terminal 40 instanced by the PC, the WS and the server, the terminal 40 being used by the personnel, the employee and other equivalent person of the trader defined as the process facility. The process facility accepts an instruction to process the raw material via the process facility terminal 40. FIG. 1 illustrates the process facility terminal 40a possessed by a process facility P1 serving as a candidate for arranging the processing, the process facility terminal 40b possessed by a process facility P2 serving as a candidate for arranging the processing, and the process facility terminal 40c possessed by a process facility P3 serving as a candidate for arranging the processing.

The delivery trader is a trader that provides transportation of the raw material from the raw material maker to the process facility, the transportation of the raw material from the process facility to some other process facility, and the transportation of the component from the process facility to a component carrying-in base designated by the component user. The delivery trader manages the transportations of the raw material and the component, a delivery consignment status, a vehicle transit status concerning the transportation, completion of delivery, and other equivalent items.

The delivery trader includes the delivery trader terminal 50 instanced by the PC, the WS and the server, the terminal 50 being used by the personnel, the employee and other equivalent person of the trader defined as the delivery trader. The delivery trader accepts an arrangement of the delivery to a destination of the transportation from a designated source of the transportation via the delivery trader terminal 50. Note that the delivery trader terminal 50 is connected via the network N to, e.g., a mobile terminal instanced by a smartphone held by a driver of the vehicle for the transportation or to an on-vehicle terminal and other equivalent terminal. FIG. 1 illustrates a logistics company terminal 50a possessed by a delivery trader L1 serving as an arrangement candidate, and a logistics company terminal 50b possessed by a delivery trader L2 serving as the arrangement candidate.

In the procurement assistance server 10 according to the embodiment, at least component information, raw material information, process information, facility information and past record information (transaction dates) are stored in a raw material process DB 110. The component information is defined as component specifications including names and standards of the components, and qualities of the raw materials. The component information is what the component specifications with the procurement arrangements being settled via the procurement assistance server 10 are accumulated in the raw material process DB 110. The component information may, however, take such a form that, e.g., the procurement assistance server 10 or a computer cooperating with the procurement assistance server 10 acquires the information from a Web site and other equivalent sites related to the components through a computer program, and accumulates the information in the raw material process DB 110. The assistance trader or an administrator of the raw material process DB 110, who is consigned by the assistance trader, may also input items of publicly opened component information such as JIS standards to the raw material process DB 110.

The raw material information is defined as data representing, e.g., properties, specifications, performances, qualities and other equivalent attributes of the variety of materials per raw material maker, which are based on the information provided from the plurality of raw material makers. The raw material information may also be information distributed as paper documents instanced by catalogues and specification sheets, and may further be information distributed as electronic documents. The administrator of the raw material process DB 110 may also input, e.g., the information distributed, disclosed and publicly opened from the respective raw material makers to the raw material process DB 110. The procurement assistance server 10 or the computer cooperating with the procurement assistance server 10 may acquire the information from the Web sites and other equivalent sites of the respective raw material makers through a computer program such as a search engine, and may store the acquired information in the raw material process DB 110.

Defined in the process information is a structure of the processing on the raw material of which the component is composed. The structure of the processing is an irreversible process of the process element, which is carried out in a course of attaining the component from the raw material. In the procurement assistance server 10 according to the embodiment, at least the structure of the processing is defined at the following four stages.

### (Process Stage 1) Process for Determining Shape of Raw Material

A process stage 1 is a step of shaping the raw material into the component by performing a machining process instanced by cutting, casting and molding on the raw material provided from the raw material maker. For example, the component is a "screw", in which case the step is exemplified by cutting a SUS bar stock provided as the raw material to a predetermined length. Further, when the SUS powder is provided as the raw material, the step is exemplified by casting and molding the powder by use of a die assembly for the screw.

### (Process Stage 2) Process for Determining Function and Property of Raw Material

Aprocess stage 2 is a step of giving a function as the component to the raw material by performing the machining process instanced by forging and machining on the raw material already undergoing the process stage 1. For example, the component is the "screw", in which case the step is exemplified by screw-cutting the bar stock cut to the predetermined length.

### (Process Stage 3) Process for Changing and Improving Performance of Raw Material

A process stage 3 is a step of performing a surface treatment such as polishing, embossing, a thermal treatment, a carbonizing treatment and a nitrogen treatment on the raw material already undergoing the process stage 2. For example, when the component is the "screw", the step is exemplified by polishing the raw material after being screw-cut. Note that the raw material already undergoing the process steps of the process stage 1 through process stage 3 can be provided as the "component".

### (Process Stage 4) Process for Changing and Improving Performance of Component

A process stage 4 is a step of performing additional treatments of multiple materials (impregnation layer) such as plating and an alumite treatment on the raw material already undergoing the process stage 3. For example, the component is the "screw", in which case the step is exemplified by plating after being polished.

Note that the component to be arranged for the procurement includes the processing designated by the component user as the case may be. For instance, the case is such that the frosting or some other equivalent treatment is designated after the plating when the component is the "screw". Corresponding to this case, the procurement assistance server 10 may get the structure of the processing to include a process option that can be designated by the component user in addition to the process stages 1 - 4 described above.

The procurement assistance server 10 stores, in the raw material process DB 110, the structure of the processing with the process option added to, e.g., the process state 4 from the process stage 1. It may be sufficient that the assistance trader or the administrator of the raw material process DB 110, who is consigned by the assistance trader, inputs the process information expressed in a list format per process stage to the raw material process DB 110.

Stored as the facility information are types of the applicable processing based on the items of information provided from the plurality of process facilities (such as cutting, casting, molding, forging, machining, polishing, embossing, plating and frosting the raw material) per process facility. The facility information is acquired in the same way as the raw material information per raw material maker is acquired.

Recorded as the past record information are past records of transactions between the component users and related traders (the raw material makers, the process facilities, and the delivery traders) concerning the procurements of components. The past records of the transactions may also be recorded via the procurement assistance server 10 when establishing the procurement transaction between the component user and the related trader concerning the procurement of component. For example, the past records of the transactions may further be recorded when the delivery trader completes the delivery of the components to the component user defined as as the carrying-in destination. At least, a date of the delivery to the component user, a delivery destination, component specifications, a quantity of delivery, a unit price, an amount billed and other equivalent items are recorded as the past record information. The procurement assistance server 10 may calculate and record a past record count when the transactions were conducted per related trader concerning the procurement of components. Note that the component specifications are accumulated as the component information in the raw material process DB 110.

In the component procurement assistance system 100 according to the embodiment, the procurement assistance server 10 presents a procurement plan of the components corresponding to specification conditions, based on the information accumulated in the raw material process DB 110 and the specification conditions concerning the procurement of components, which are inputted from the component user. Combinations of raw material candidates building up the components and manufacturing process candidates including multi-staged process elements with respect to each raw material candidate are presented as component procurement candidates in the procurement plan. A procurement expense (cost) including a transport cost per component procurement candidate, a delivery date and other equivalent items are presented in the procurement plan. The procurement plan presented by the procurement assistance server 10 is displayed on a display screen of an LCD (Liquid Crystal Display) and other equivalent display devices equipped in the component user terminal 20 via the network N.

The component user browses the procurement plan presented on, e.g., the display screen, then makes a decision about the presented procurement costs, the presented delivery dates and other equivalent items associated with a plurality of component procurement candidates, and is thereby enabled to select a desired component procurement destination. The procurement assistance server 10 according to the embodiment enables the assistance for determining the selection of the related trader concerning the procurement of components and the arrangements thereof.

### <2. Configuration of Apparatus>

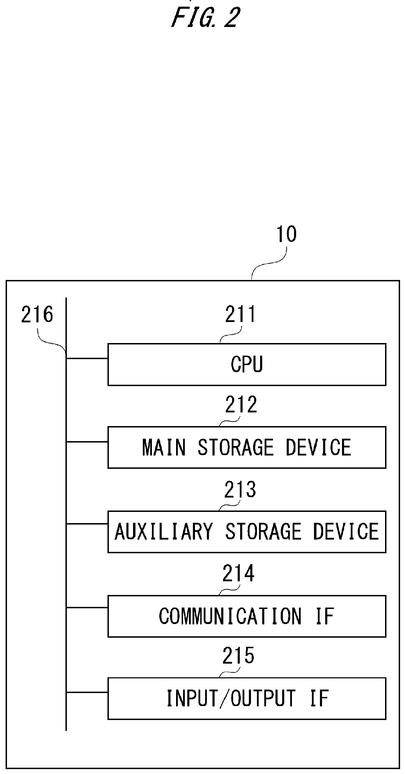

FIG. 2 is a diagram illustrating one example of a hardware configuration of a computer. The procurement assistance server 10, the component user terminal 20, the raw material maker terminal 30, the process facility terminal 40 and the delivery trader terminal 50 in FIG. 1 are exemplified by the configuration of a computer 200 illustrated in FIG. 2. Note that the mobile terminal or the on-vehicle terminal held by the driver of the vehicle concerning the transportation is also exemplified by the configuration of the computer 200 depicted in FIG. 2.

The computer 200 illustrated in FIG. 2 includes a CPU (Central Processing Unit) 211, a main storage device 212, an auxiliary storage device 213, a communication IF (Interface) 214 and an input/output IF 215, which are interconnected via a connection bus 216. The main storage device 212 and the auxiliary storage device 213 are recording mediums that are readable by the computer 200. Note that the components described above may be each provided on a plurality-by-plurality basis, and a part of the components may not be provided.

The CPU 211 is called an MPU (Microprocessor) oraprocessor. It does not, however, mean that the CPU 211 is limited to a single processor, and a multi-processor configuration may be taken. The single CPU connected by a single socket may take a multi-core configuration. The CPU 211 is acentralprocessingunit that controls the whole computer 200. The CPU 211 deploys in an executable manner, e.g., a program stored in the auxiliary storage device 213 onto an operation area of the main storage device 212, and provides functions matching with predetermined purposes by controlling peripheral devices through running the program. Respective functions of the procurement assistance server 10, the component user terminal 20, the raw material maker terminal 30, the process facility terminal 40 and the delivery trader terminal 50 are provided in the component procurement assistance system 100 according to the embodiment.

The main storage device 212 stores the computer program to be run by the CPU 211, and the data to be processed by the CPU 211. The main storage device 212 includes, e.g., a flash memory, a RAM (Random Access Memory) and a ROM (Read Only Memory). The auxiliary storage device 213 stores various categories of programs and various items of data on the recording medium in a readable/writable manner. The auxiliary storage device 213 is called also an external storage device. For example, an OS (Operating System), the various categories of programs, the various items of data and various types of tables are stored in the auxiliary storage device 213. The OS includes a communication interface program that transfers and receives the data to and from external devices connected via the communication IF 214. The external devices include information processing apparatuses instanced by the PC, the WS, the server and the mobile terminal, and the external storage devices, which are connected to the network N.

The auxiliary storage device 213 is used as a storage area auxiliary to the main storage device 212, and stores the computer program to be run by the CPU 211 and the data to be processed by the CPU 211. The auxiliary storage device 213 is instanced by a silicon disk including a nonvolatile semiconductor memory (flash memory, EPROM (Erasable Programmable ROM)), a solid-state drive, a hard disk drive (HDD, Hard Disk Drive). The auxiliary storage device 213 is exemplified by detachable recording medium drives such as a CD drive, a DVD drive and a BD drive . The detachable recording medium is exemplified by a CD, a DVD, a BD, a USB (Universal Serial Bus) memory, an SD (Secure Digital) and a memory card.

The communication IF 214 is an interface with the network connected to the computer 200. In the procurement assistance server 10 in FIG. 1, the data are transferred and received based on predetermined communication standards to and from the component user terminal 20, the raw material maker terminal 30, the process facility terminal 40 and the delivery trader terminal 50 via the communication IF 214, which are connected to the network N.

The input/output IF 215 is an interface for inputting and outputting the data from and to the devices connected to the computer 200. Connected to the input/output IF 215 are, e.g., a keyboard, a pointing device instanced by a touch panel and a mouse, and an input device instanced by a microphone. The computer 200 accepts an operation instruction and other equivalent indications from an operator who operates the input device via the input/output IF 215.

Connected further to the input/output IF 215 are a display device instanced by the LCD (Liquid Crystal Display), an EL (Electroluminescence) panel and an organic EL panel, and an output device instanced by a printer and a loudspeaker. The computer 200 outputs via the input/output IF 215 the data and the information to be processed by the CPU 211, and the data and the information to be stored in the main storage device 212 and the auxiliary storage device 213.

The procurement assistance server 10 in FIG. 1 provides information processing functions of, at least, an input/output unit 101, a process instruction sequence unit 102, a corresponding facility generation unit 103 and a process procurement information calculation unit 104 by causing the CPU 211 to run the program. At least a part of the processing functions described above may, however, be provided by a DSP (Digital Signal Processor), an ASIC (Application Specific Integrated Circuit) and a GPU (Graphics Processing Unit). Similarly, at least a part of the processing functions described above may be dedicated LSIs (Large Scale Integrations) of an FPGA (Field Programmable Gate Array), a numeric data processor, a vector processor and an image processing processor, and other digital circuits. Further, at least a part of the processing functions described above may include analog circuits. The procurement assistance server 10 refers to the processing functions described above, or includes the auxiliary storage device 213 and the raw material process DB 110 as storage destinations of the data to be managed.

### <3. Processing Configuration>

The respective information processing functions of the input/output unit 101, the process instruction sequence unit 102, the corresponding facility generation unit 103 and the process procurement information calculation unit 104, which are provided by the procurement assistance server 10 according to the embodiment, will hereinafter be described.

### (Input/Output Unit: Input Process)

In the procurement assistance server 10 illustrated in FIG. 1, the input/output unit 101 accepts the specifications of the procurement target components inputted via the component user terminal 20. For instance, an input screen concerning the procurement of components is displayed on the display screen of the LCD or other equivalent display of the component user terminal 20. The input screen includes an input area of information of the component delivery destination (component carrying-in place). The component user inputs via, e.g., the input screen the carrying-in destination (delivery destination) together with the specification information such as the names, the standards and the process options about the procurement target components.

The procurement target component is the "screw" with no addition of the process option, in which case an input form such as "M16 standard screw (SUS304)" is exemplified as an input example of the specification information to be accepted by the input/output unit 101. Further, the procurement target component is a "plate" with an addition of the process option, in which case an input form such as "SUS plate 50 x 50 x 5 (mm), for optical experiment" is exemplified. The input/output unit 101 temporarily stores the input of the accepted component specifications and the delivery destination information in a predetermined area of the main storage device 212 by being associated with accepted time information (timestamp) . The accepted component specifications are handed over to the process instruction sequence unit 102.

Note that the procurement assistance server 10 accepts an input of keywords concerning the procurement target component, and may provide a search function for the raw material information and the component information that are accumulated and stored in the raw material process DB 110. For example, the input/output unit 101 of the procurement assistance server 10 accepts keywords "screw, hard" for searching the raw material process DB 110 for the information accumulated and stored therein. The input/output unit 101 extracts, based on the accepted keywords, the component information and the raw material information associated with the component "screw. The input/output unit 101 further extracts, from within the extracted raw material information, the raw materials with the data being registered and associated with the hardness of the raw material. The input/output unit 101 may present a combination of the component information associated with "screw" and the raw material information associated with "hard", which are retrieved based on the accepted keywords, in the list format by using a predetermined display template . For example, radio buttons and other equivalent elements for selections about whether the component can be procured or not, may also be added to the search information presented in the list format. The component users in a fuzzy status about the specifications of the procurement target components are enabled to present the specifications of the component procurement candidates conforming with the purposes.

### (Process Instruction Sequence Unit)

The process instruction sequence unit 102 searches, based on the component specification information handed over from the input/output unit 101, the raw material process DB 110 for the component information accumulated and stored therein, thereby extracting the information on the raw materials and the processing (process elements) and other equivalent items associated with the specification information. The extracted information contains plural types of raw materials and plural types of process elements. The process instruction sequence unit 102 aligns (sorts) the plural types of extracted process elements on a type-by-type basis in the sequence of manufacturing processes ranging from the raw materials to the components by referring to the process information stored in the raw material process DB 110. The process instruction sequence unit 102 generates a plurality of manufacturing process candidates satisfying the component specification information. The process instruction sequence unit 102 temporarily stores the plurality of generated manufacturing process candidates satisfying the component specification information in a predetermined area of the main storage device 212, and hands over the plurality of manufacturing process candidates to the corresponding facility generation unit 103.

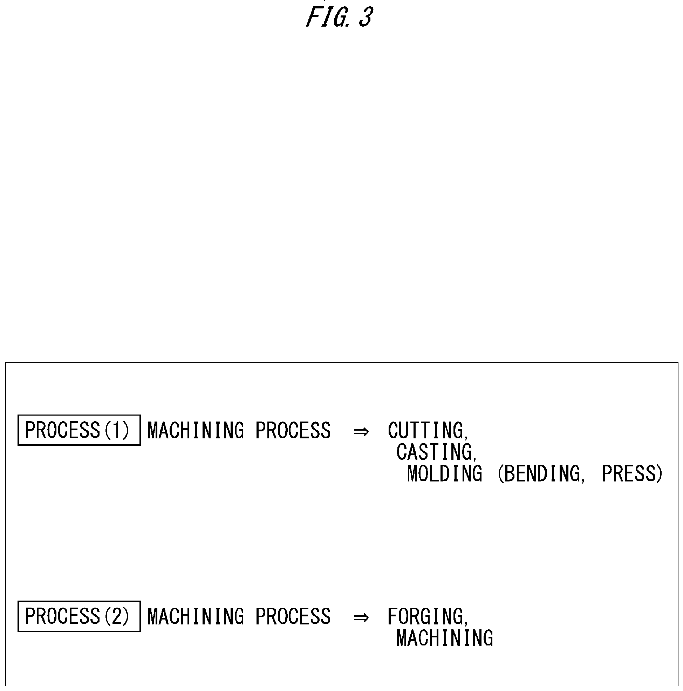

FIGS. 3, 4 and 5 are diagrams each illustrating one example of the process information retained in the raw material process DB 110. As already described, in the process information, the structure of the processing on the raw material building up the component is defined as the irreversible process of the process element, which is carried out in the course of attaining the component from the raw material. The process instruction sequence unit 102 sorts and aligns the process information contained in the extracted component information, at least, in a process sequence from the process stage 1 to the process stage 4 by referring to the process information illustrated in FIGS. 3, 4 and 5.

FIG. 3 illustrates an example of registering the process element to determine a shape of the raw material defined (the process stage 1) as the process information, and registering the process element to determine the function and the property of the raw material of (the process stage 2). Exemplified at the process stage 1 ("process (1)") are a process of cutting the raw material to a predetermined length, a process of casting the powder by use of the die assembly, and a molding process such as bending and pressing. The forging process and the machining process are exemplified at the process stage 2 ("process (2)").

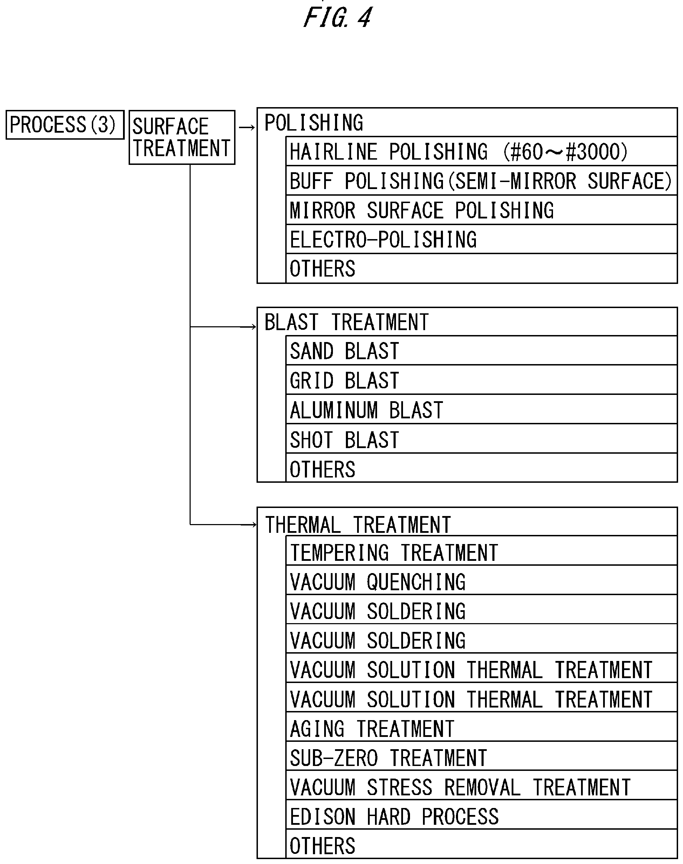

FIG. 4 illustrates an example of registering the process elements to modify and improving the performance of the raw material defined (process stage 3) as the process information. A polishing process, a blast treatment process and a thermal treatment process are exemplified as surface treatments at the process stage 3 ("process (3)"). Detailed types are defined in the polishing process, the blast treatment process and the thermal treatment process, respectively. For instance, hairline polishing is defined so as to designate levels of fineness, i.e., No. 60 (#60) -No. 3000 (#3000) in detail. Similarly, buff polishing (semi-mirror surface), mirror polishing, electro-polishing and other polishing treatments described above are defined in detail, in which the buff polishing is to polish the surface in a way that adheres abrasive grains to a soft buff composed of a flexible raw material such as cloth, leather and rubber, and the mirror polishing is to polish the surface to obtain a mirror-like lustrous surface, and the electro-polishing is to perform the mirror treatment by electrochemically dissolving the surface while dipping the surface into a solution.

Sand blast, grid blast, aluminum blast, shot blast and above-mentioned blast treatments illustrated in FIG. 4 are also defined in detail with respect to the blast treatment process. A tempering treatment, vacuum quenching, vacuum soldering, a vacuum solution thermal treatment, an aging treatment, a sub-zero treatment, a vacuum stress removal treatment, an Edison Hard process and above-mentioned other thermal treatments illustrated in FIG. 4 are defined in detail with respect to the thermal treatment process. Note that a carbonizing treatment and a nitrogen treatment other than the registration example in FIG. 4 are defined in the process information.

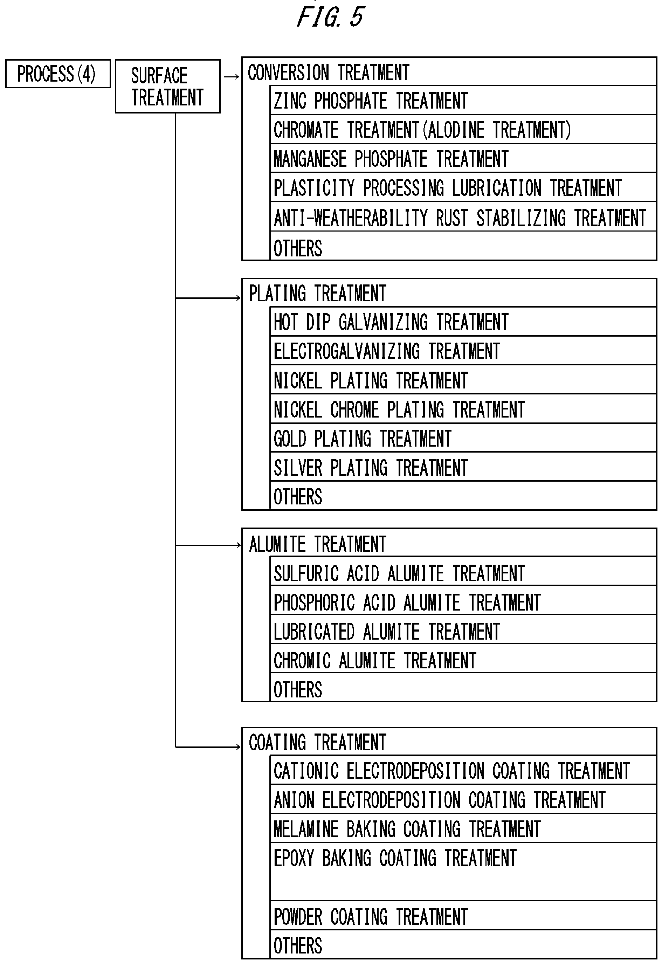

FIG. 5 illustrates an example of registering the process element to modify and improve the performance of the component defined (the process stage 4) as the process information. A conversion treatment (degreasing treatment), a plating treatment, an alumite treatment and a coating treatment are exemplified as the surface treatments at the process stage 4 ("process (4)"). Respectively hierarchized treatment processes are defined in the conversion treatment (degreasing treatment), the plating treatment, the alumite treatment and the coating treatment also at the process stage 4. For example, the conversion treatment involves defining a zinc phosphate treatment, a chromate treatment (Alodine treatment), a manganese phosphate treatment, a plasticity processing lubrication treatment, an anti-weatherability rust stabilizing treatment and other conversion treatments described above are defined in detail in the conversion treatment (degreasing treatment). A hot dip galvanizing treatment, an electrogalvanizing treatment, a nickel plating treatment, a nickel chrome plating treatment, a gold plating treatment, a silver plating treatment, and other plating treatments described above are defined in detail in the plating treatment. A sulfuric acid alumite treatment, a phosphoric acid alumite treatment, a lubricated alumite treatment, a chromic alumite treatment, and other alumite treatments described above are defined in detail in the alumite treatment. A cationic electrodeposition coating treatment, an anion electrodeposition coating treatment, a melamine baking coating treatment, an epoxy baking coating treatment, a powder coating treatment, and other coating treatments described above are defined in detail in the coating treatment.

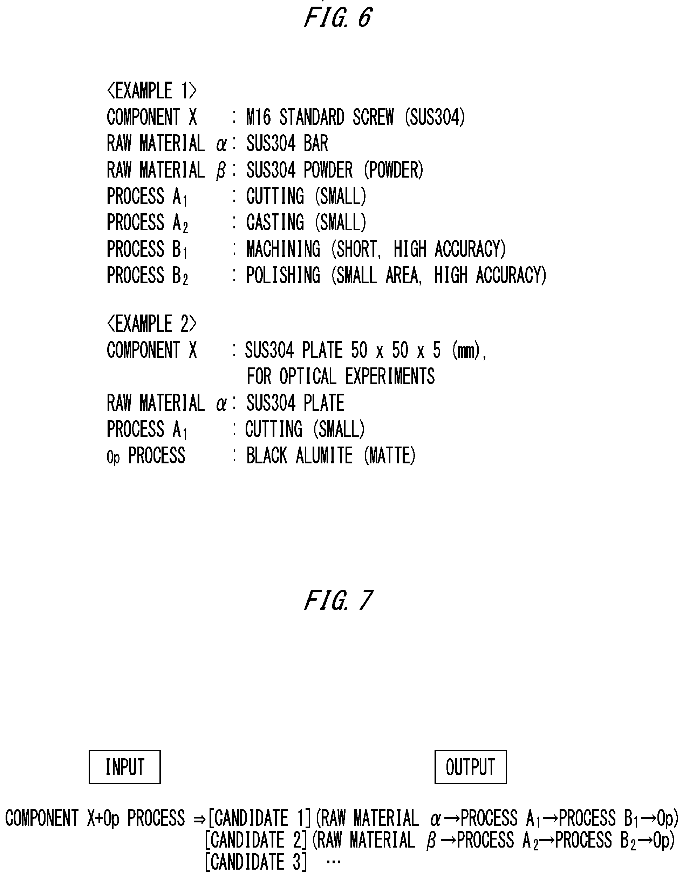

FIG. 6 is a diagram illustrating an example of a search result of the component information based on the component specification information. In the search result illustrated in FIG. 6, the process elements of the searched component information are sorted in the manufacturing process sequence of at least the process stage 1 through the process stage 4.

"<Example 1>" in FIG. 6 is an example of the search result based on the specification information of the component "screw" inputted in the form of "M16 standard screw (SUS304)" without adding the process option. In addition, "<Example 2>" in FIG. 6 is an example of the search result based on the specification information of the component "plate" inputted in the form of "SUS plate 50 x 50 x 5 (mm), for optical experiments" in a way that adds "black alumite (matte)" to the process option.

In "<Example 1>" in FIG. 6, the component "M16 standard screw (SUS304)" becoming a component user procurement target is designated as "component X". Further, two types of "raw material α: SUS304 bar" and "raw material β: SUS304 powder (powder)" are searched for as the raw materials building up a "component X". Note that "process A1", "process A2", "process B1", and "process B2" represent the process elements aligned by the process instruction sequence unit 102 in the manufacturing process sequence from the material to the component with reference to the process information. "cutting (small) " is searched for in "process A1"; "casting (small)" is searched for in "process A2"; "machining (short, high accuracy)" is searched for in "process B1"; and "polishing" (small area, high accuracy)" is searched for in "process B2".

The process instruction sequence unit 102 extracts, for example, words related to the manufacturing process instanced by "cutting", "casting", "thread forming", "machining" and "polishing" of the processing that are contained in the component information of the raw material process DB 110. Then, the process instruction sequence unit 102 searches the raw material process DB 110 for the process information with the extracted words serving as keywords, and specifies a treatment structure (process stage 1 through process stage 4) associated with the extracted words. It may be sufficient that the process instruction sequence unit sorts the process elements contained in the component information, corresponding to the specified treatment structure.

Note that terms for specifying a manufacturing process till processing the material into the component may be defined in the component information by being associated with the materials. Further, the names of the components and a permutation of a series of process elements for manufacturing and producing the components having these names may be defined in the component information. The definition is exemplified such as "component: nut, process (1) : cutting, process (2): machining".

In "<Example 2>" in FIG. 6, the component "SUS plate 50 x 50 x 5 (mm), for optical experiment" becoming the component user procurement target is designated as "component X". Further, "material α: SUS304 plate" is retrieved from the component information of the raw material process DB 110 as the raw material building up "component X". The "cutting (small)" treatment for processing "material α" is sorted as "process A1". Note that the process option added when inputting the specifications is extracted from the process information of the raw material process DB 110 as "Op process: black alumite (matte)".

FIG. 7 is a diagram illustrating a generation example of the plurality of manufacturing process candidates satisfying the specification information of the component. The process elements contained in the manufacturing process become information for extracting the process facility, and hence a train of process elements associated with the manufacturing process are also called a procurement candidate list. The process instruction sequence unit 102 generates the procurement candidate list satisfying the component specification information from the search result of the component information described by using, e.g., FIG. 6. The process instruction sequence unit 102 converts the component information (specification information) inputted from the component user into a form of "raw material information x plural items of processing information" (procurement candidate list).

In FIG. 7, "component X + Op process" represents the specification information of the component handed over from the input/output unit 101. Then, "[candidate 1], [candidate 2], [candidate 3]" represent the procurement candidates satisfying the specification information of the components. As illustrated in FIG. 7, the respective candidates are associated with the raw materials building up the components and the process elements applied to the raw materials in the way of being aligned in the sequence (from the process stage 1 to the process stage 4) of the process elements in the manufacturing process from the raw material to the component.

In FIG. 7, for example, " [candidate 1]" is associated with the manufacturing process from (process A1) to (process B1) and (Op process) with (raw material α) being used as the material. Further, "[candidate 2]" is associated with the manufacturing process from (process A2) to (process B2) and (Op process) with (raw material β) being used as the material. The process instruction sequence unit 102 acquires combinations of (raw materials + processes) illustrated in FIG. 7 from the component information in the raw material process DB 110, and generates the acquired combinations as a procurement candidate list satisfying the component specification conditions.

Note that a listing sequence of the procurement candidate list may be made so that the candidates are aligned based on the past records of the conducted transactions of the components. For example, the candidates may be aligned in the sequence from the nearest date when the component transaction is conducted, and may also be aligned based on a past record count with the component transaction being conducted. The candidates may further be aligned corresponding to a quantity of process elements for the raw material.

### (Corresponding Facility Generation Unit)

The corresponding facility generation unit 103 specifies a corresponding facility (providing maker) capable of providing the materials and a corresponding facility (process facility) capable of corresponding to each treatment in the course of the process performed on the raw material on the basis of the component procurement candidate list handed over from the process instruction sequence unit 102. The corresponding facility is specified by searching for the raw material information and the facility information that are stored in the raw material process DB110. The corresponding facility generation unit 103 extracts the searched corresponding facility from the raw material process DB 110. Then, the corresponding facility generation unit 103 generates a correlation table configured by combining the providing makers of the extracted raw materials with the process facilities that provide the process elements in the manufacturing process. The correlation table is generated for each component procurement candidate. The corresponding facility generation unit 103 temporarily stores the correlation table generated per procurement candidate in a predetermined area of the main storage device 212, and hands over the plurality of candidates to the process procurement information calculating unit 104.

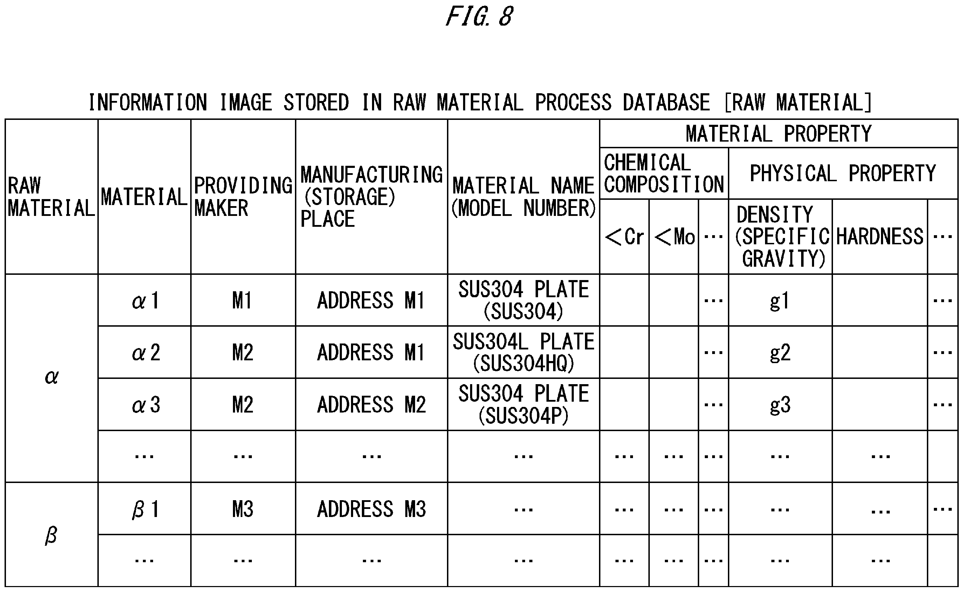

FIG. 8 is a diagram illustrating one example of the raw material information stored in the raw material process DB 110. The raw material information illustrated in FIG. 8 is an example of the raw material information corresponding to "SUS304 plate". As illustrated in FIG. 8, the raw material information is stored as a record per raw material in the raw material process DB 110. The record per raw material is further subdivided into sub-records per material constituting the raw material. Recorded in the sub-record per material are a name of the providing maker to provide the material, a manufacturing (storage) place (address) of the material, a material name (model number), and a material property. The material property is further differentiated into chemical compositions (e.g., Cr component ratio, Mo component ratio, etc.) constituting the material, and physical properties of the material (e.g., density (specific gravity) and hardness).

Note that although omitted in the example of FIG. 8, each record per raw material contains a delivery quantity, a unit price, and identifying information (e.g., a trader identification code, a trader identification number, etc.) for identifying the trader instanced by the providing maker. In addition, the material property recorded in each record per raw material may contain environmental properties (heat resistance, cold resistance, corrosion resistance, etc.), a thermal conductivity/electric conductivity, dimensional stability (linear expansion coefficient), an aging property, a magnetization property and other equivalent properties. Note that the past record count with the transactions being conducted may also be recorded in each record per raw material.

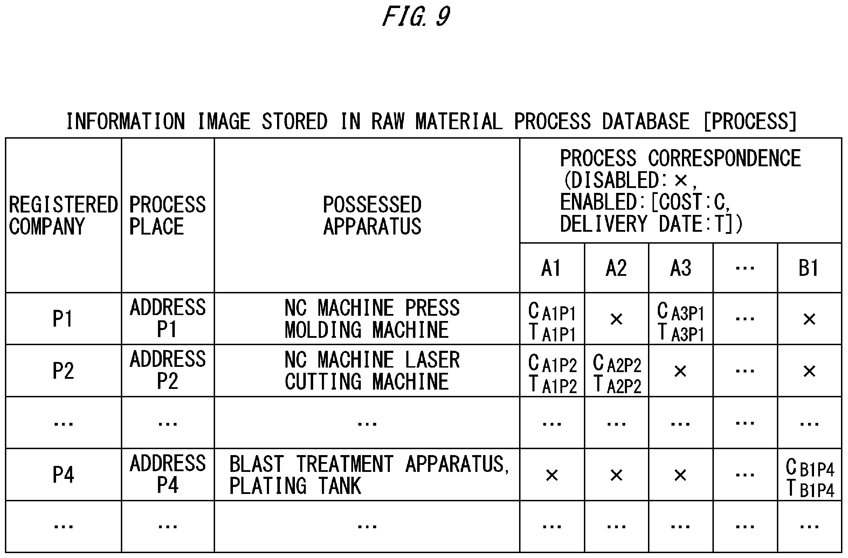

FIG. 9 is a diagram illustrating one example of the facility information stored in the raw material process DB 110. In the raw material process DB 110, as illustrated in FIG. 9, the facility information is stored, in the raw material process DB 110, as a record per process facility that provides the processing (process elements) performed on the raw material. A trader name of the process facility is recorded as "registered company" in the record per process facility. However, the trader name of the process facility may be identifying information (e.g., a trader identification code, a trader identification number, etc.) for identifying the trader. Note that although omitted in the example of FIG. 9, the past record count with the transactions being conducted may be recorded in the record per process facility.

Recorded in the record per process facility are a place for providing the process elements as "process place", and a type of the possessed device as "possession device". Further, the correspondence-enabled process elements are recorded by being subdivided per treatment type (A1, A2, A3,..., B1) in the record per process facility. In the example of FIG. 9, "cost: C, delivery date: T", which is a combination of a cost for the treatment and a delivery date, is recorded with respect to the process correspondence-enabled process elements. A predetermined symbol "x" is recorded with respect to the process correspondence-disabled process elements.

In FIG. 9, for example, in a record with "P2" being stored in "registered company", "address P2" is exemplified as "process place", and "NC machine, laser cutting machine" is exemplified as "possession device". Similarly, "A1" and "A2" are exemplified as the process correspondence-enabled process elements, while "A3" and "B1" are process correspondence-disabled process elements. "CA1P2" is exemplified as the cost of the process element "A1", and "TA1P2" is exemplified as the delivery date. In the process element "A2", "CA2P1" is exemplified as the cost and "TA2P2" is exemplified as the delivery date.

The corresponding facility generation unit 103 extracts, e.g., the raw material information "raw material α" associated with "[candidate 1]" in the component procurement candidate list illustrated in FIG. 7. The corresponding facility generation unit 103 searches for the raw material information stored in the raw material process DB 110, with the extracted "raw material α" being used as a keyword. As a result of the search, a record corresponding to "raw material α" illustrated in FIG. 8 is specified from within the raw material information. The corresponding facility generation unit 103 extracts all items of information by associating the types "α1", "α2", "α3", "..." of the material S constituting "raw material α" with the providing maker names "M1", "M2", "M2", "..." from the sub-record per material of the "material α" record. The corresponding facility generation unit 103 temporarily stores the extracted information in a predetermined area of the main storage device 212 by being associated with the "material α".

Next, the corresponding facility generation unit 103 extracts the process information "process A1" closest to the raw material information "raw material α" of "[candidate 1]". The corresponding facility generation unit 103 searches for the facility information stored in the raw material process DS 110 by using "A1" representing the type of the treatment as a keyword from the extracted "process A1". As a result of the search, a record group with "cost: C, delivery date: T" being recorded in "A1" in FIG. 9 is specified from within the facility information. In FIG. 9, there are specified records with "P1" and "P2" being stored in, e.g., "registered company".

The corresponding facility generation unit 103 extracts all of the trader names of the process facilities from the record group with "cost: C, delivery date: T" being recorded in "A1". The corresponding facility generation unit 103 temporarily stores the trader names of the extracted process facilities in a predetermined area of the main storage device 212 by being associated with the process type "A1".

Further, the corresponding facility generation unit 103 extracts the process information "process B1" closest to the process information "process A1" of "[candidate 1]". The corresponding facility generation unit 103 searches for the facility information stored in the raw material process DS 110 with "B1" representing the type of the treatment being used as a keyword from the extracted "process B1". As a result of the search, a record group with "cost: C, delivery date: T" being recorded in "B1" in FIG. 9 is specified from within the facility information. In FIG. 9, for example, a record with "P4" being stored in "registered company" is specified. The corresponding facility generation unit 103 extracts all of the trader names of the process facilities from the record group with "cost: C, delivery date: T" being recorded in "B1", and temporarily stores the trader names of the process facilities in a predetermined area of the main storage device 212 by being associated with the process type "B1".

The corresponding facility generation unit 103 iterates the extracting operation of the facility information associated with the process information described above, and repeatedly extracts the engine information corresponding to the above-described processing information, thus extracting all of the trader names associated with the processing (including Op process) associated with "[candidate 1]".

Then, the corresponding facility generation unit 103 generates, based on the raw material information and the facility information that are extracted from the raw material process DS 110, a correlation table containing all of the facilities respectively associated with "raw material α", "process A1", "process B1 "and "Op" associated with "[candidate 1]". The providing makers of the variety of materials constituting the raw materials in the manufacturing process and the process facilities for providing the process elements are described as components in the correlation table.

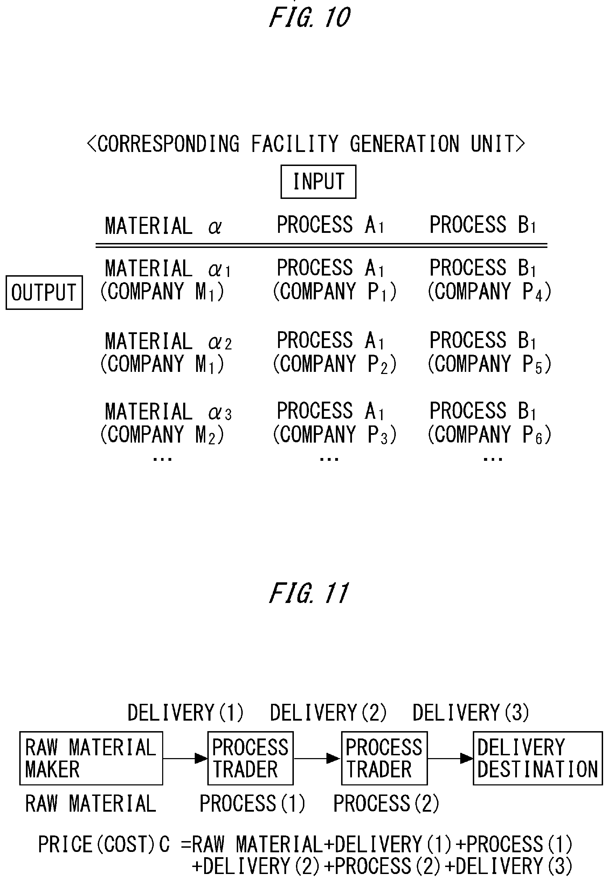

FIG. 10 is a diagram illustrating one example of the correlation table. The correlation table illustrated in FIG. 10 is an example of the correlation table associated with "[candidate 1]" in FIG. 7. In the correlation table in FIG. 10, "raw material α", "process A1" and "process B1" associated with "[candidate 1]" are described as rows. Note that "Op" associated with "[candidate 1]" is omitted in FIG. 10.

As illustrated in FIG. 10, a combination of a material group (α1, α2, α3) of "raw material α" and a providing maker names (M1 company, M2 company) is described as a column representing the components on a lower side of "raw material α". A combination of the process element "A1" and the trader names (P1 company, P2 company, P3 company) of the process facilities that provide the process element "A1" is also described as a column representing the components on the lower side of "process A1". Similarly, a combination of the process element "B1" and the trader names (P4 company, P5 company, P6 company) of the process facilities that provide the process element "B1" is described as a column representing the components on the lower side of "process B1".

The corresponding facility generation unit 103 hands over, to the process procurement information calculating unit 104, the correlation table generated per procurement candidate contained in the procurement candidate list of the component, which is handed over from the process instruction sequence unit 102.

### (Process Procurement Information Calculating Unit)

The process procurement information calculating unit 104 estimates a cost and a delivery date concerning the procurement of components, based on the correlation table per procurement candidate, which is handed over from the corresponding facility generation unit 103. The estimation of the cost and the delivery date is performed by, for example, combining all of the components of the raw material and the components per process element, which are described in the correlation table. For example, when there are 3 types of components of the raw material, 4 types of components of the process element A1, and 2 types of components of the process element B1, the costs and the estimations of the delivery dates are calculated with respect to all of 24 combinations given by 3 (types) x 4 (types) x 2 (types) = 24. The process procurement information calculating unit 104 temporarily stores the calculated estimation result in a predetermined area of the main storage device 212, and hands over this result to the input/output unit 101.

FIG. 11 is an explanatory diagram illustrating the cost and the delivery date concerning the procurement of components. Such a case is assumed by way of an explanatory example that there is one providing maker for providing the raw material and two process facilities (process traders) related to the process elements of the raw materials. As illustrated in FIG. 11, a purchase cost (raw material) for purchasing the raw material is incurred as the cost concerning the procurement of component. Similarly, a cost concerning the process elements of the raw material is incurred per (process element (process (1)), process (2)). There are also incurred a cost for the delivery (delivery (1)) from the providing maker of the raw material to the process trader, a cost of the delivery (delivery (2)) from the process trader to a next process trader for providing the process elements, and a cost for transportation (delivery (3)) from the next process trader to the delivery destination of the component user. Accordingly, in the case of the explanatory example, the component price (cost) C becomes a totalized amount of the costs related to "raw material + delivery (1) + process (1) + delivery (2) + process (2) + delivery (3)". Note that the delivery cost includes a cost for packing a transportation package.

The delivery date concerning the procurement of component is calculated in the same way as the component price C is done. To be specific, the delivery date concerning the procurement of component becomes a period given by totalizing these periods: "raw material procurement period + delivery (1) period + process (1) period + delivery (2) period + process (2) period + delivery (3) period".

Here, it is assumed that the component delivery involves making use of a small-volume delivery service and a large-volume delivery service provided by a logistics company. In the small-volume delivery service, the cost for delivery may be calculated from, e.g., an area-by-area freight list based on a weight and a size (size) of the transportation package, and addresses of the delivery source and the delivery destination, and other equivalent tables.

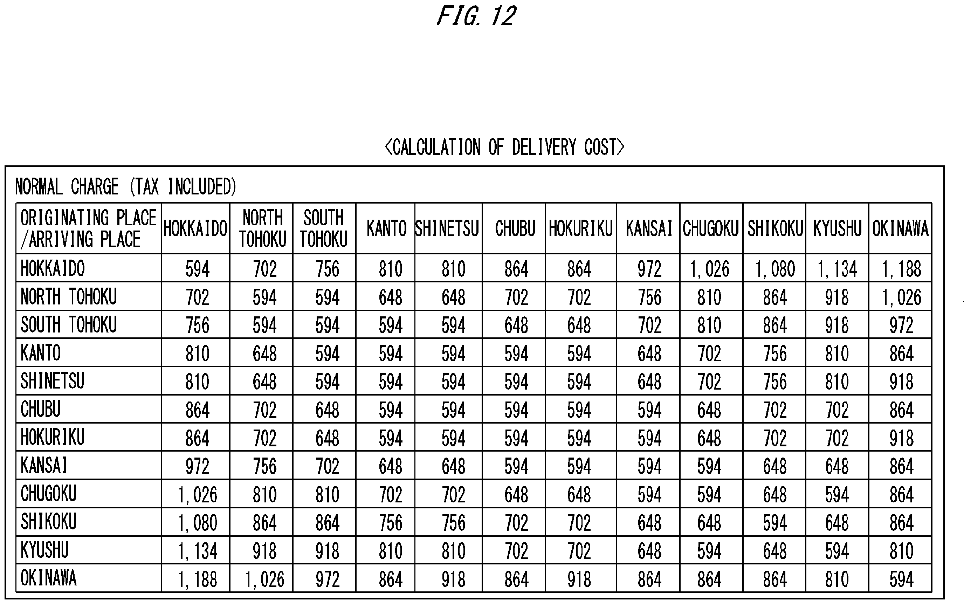

FIG. 12 is a diagram illustrating one example of the area-by-area freight list for the small-volume delivery. In the area-by-area freight list illustrated in FIG. 12, area names of the delivery sources and area names of the delivery destinations form rows and columns, in which delivery costs are stored in fields as intersections between the area names described in the rows and the area names described in the columns. For example, the delivery source is "Hokkaido", and the delivery destination is "Hokkaido", in which case a delivery cost "594 Yen" is incurred. Similarly, when the delivery source is "Hokkaido" and the delivery destination is "Okinawa", the delivery cost "1,188 Yen" is incurred.

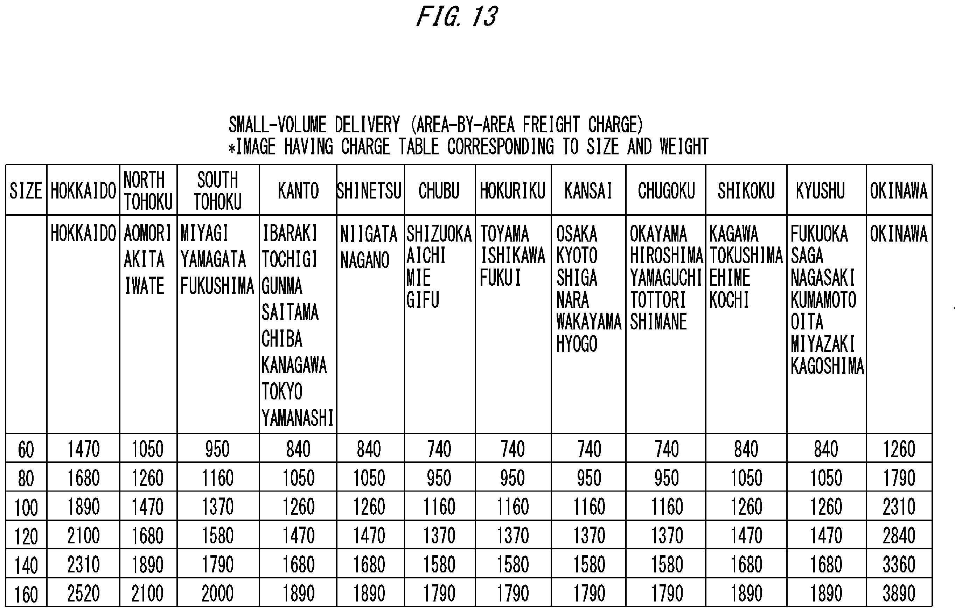

FIG. 13 is a diagram illustrating one example of a size-by-size charge table of the transportation packages. In FIG. 13, a freight charge within the same area is prescribed as a charge on a maximum dimension (cm) basis of a length, a width, a depth of the transportation package. For instance, when delivered within the same area, i.e., "Hokkaido", the maximum dimension (cm) is equal to or higher than 60 cm but smaller than 80 cm, in which case a delivery cost "1,470" Yen is incurred. Similarly, when the maximum dimension (cm) is equal to or higher than 80 cm but smaller than 100 cm, a delivery cost "1,860" Yen is incurred.

The area-by-area freight lists depicted in FIGS. 12 and 13 are stored in the raw material process DS 110. The assistance trader or the administrator of the raw material process DS 110 consigned by the assistance trader may input, to the raw material process DS 110, the area-by-area freight lists distributed, disclosed or publicly opened from the respective logistics companies to provide the small-volume delivery services. The procurement assistance server 10 or the computer cooperating with the procurement assistance server 10 may acquire the area-by-area freight lists from Web sites of the respective logistics companies through a computer program instanced by a search engine, and may store these lists in the raw material process DS 110.

It may be sufficient that the process procurement information calculating unit 104 estimates the delivery cost with reference to, for example, the area-by-area freight lists stored in the raw material process DS 110 when delivering the component by utilizing the small-volume delivery service.

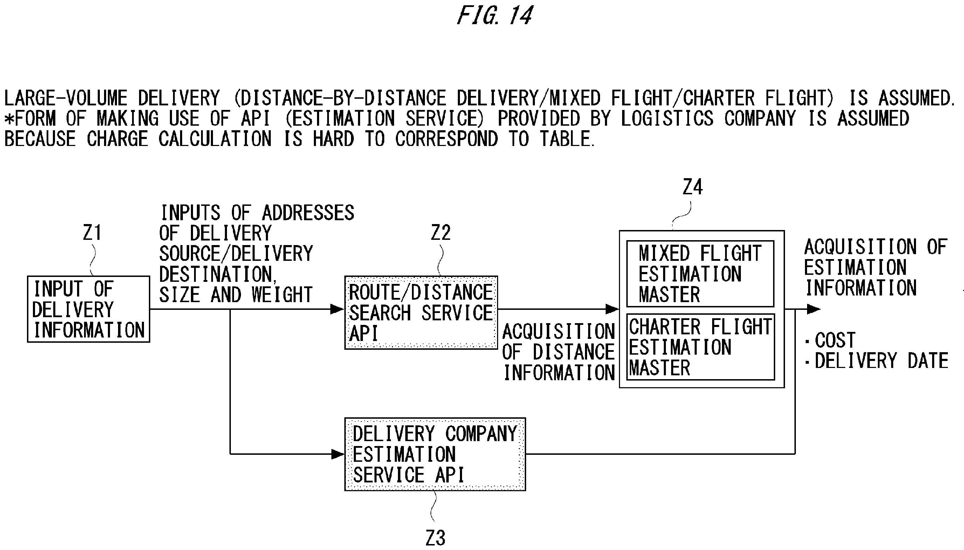

While on the other hand, when utilizing the large-volume delivery service it is feasible to use, for example, a mixed flight, a charter flight, a courier service on a distance-by-distance basis. In the large-volume delivery service, however, it is difficult to calculate the charge corresponding to the table, and hence, e.g., an estimation service provided by the logistics company is utilized. The estimation service provided by the logistics company may be utilized via, e.g., API (Application Programming Interface) . FIG. 14 illustrates a data flowchart of the process procurement information calculating unit 104 when utilizing the large-volume delivery service via the API.

The process procurement information calculating unit 104 acquires, e.g., delivery information such as a delivery source address, a delivery destination address, a size and a weight of the transportation package from the component information, the raw material information and the facility information stored in the raw material process DS 110 (Z1). The process procurement information calculating unit 104 connects to the Web site of the logistics company to provide the estimation service via, e.g., the network N. The procurement assistance server 10 searches for and utilizes a route/distance search service Z2 and a delivery company estimation service Z3 provided by the logistics company. When utilizing the route/distance search service Z2 and the delivery company estimation service Z3, there are inputted the items of delivery information such as the address of the delivery source, the address of the delivery destination, the size and the weight of the transportation package.

In the example of FIG. 14, the distance information related to the route between the delivery source and the delivery destination acquired based on the route/distance search service Z2 is inputted to the mixed flight estimation master or the charter flight estimation master (Z4) for estimating the freight charge. Note that when the route/distance search service Z2 is not provided, the delivery cost based on the delivery information is estimated via the delivery company estimation service Z3. The process procurement information calculating unit 104 acquires estimation information estimated via the route/distance search service Z2 and the delivery company estimation service Z3 provided by the logistics company. The estimation information contains the delivery cost and the delivery date.

The process procurement information calculating unit 104 specifies the purchase cost, the process cost and the delivery cost of each of the raw materials illustrated in FIG. 11 with respect to the combinations of the respective components of the raw materials and the components per process element that are contained in the correlation table per procurement candidate, which is handed over from the corresponding facility generation unit 103. Similarly, the process procurement information calculating unit 104 specifies a procurement period, a process period and a delivery period of the raw materials with respect to the combinations of the respective components of the raw materials and the components per process element that are contained in the correlation table per procurement candidate, which is handed over from the corresponding facility generation unit 103. The purchase cost and the procurement period of the raw materials are specified from the raw material information stored in the raw material process DS 110. The process cost and the process period are specified from the facility information stored in the raw material process DS 110. As described by using FIGS. 12, 13, and 14, the delivery cost and the delivery period are specified based on the information (freight charge table, estimation service) provided by the logistics company.

The process procurement information calculating unit 104 totalizes the specified purchase cost, process cost, and delivery cost, thereby calculating a cost for the combination of each component of the raw material and each component per process element, which are contained in the correlation table. Similarly, the process procurement information calculating unit 104 totalizes the specified procurement period, process period and delivery period, thereby calculating a delivery date with respect to the combination of each component of the raw material and each component per process element, which are contained in the correlation table. The process procurement information calculating unit 104 generates a component procurement assistance table per procurement candidate, based on the calculated cost and the calculated delivery date.

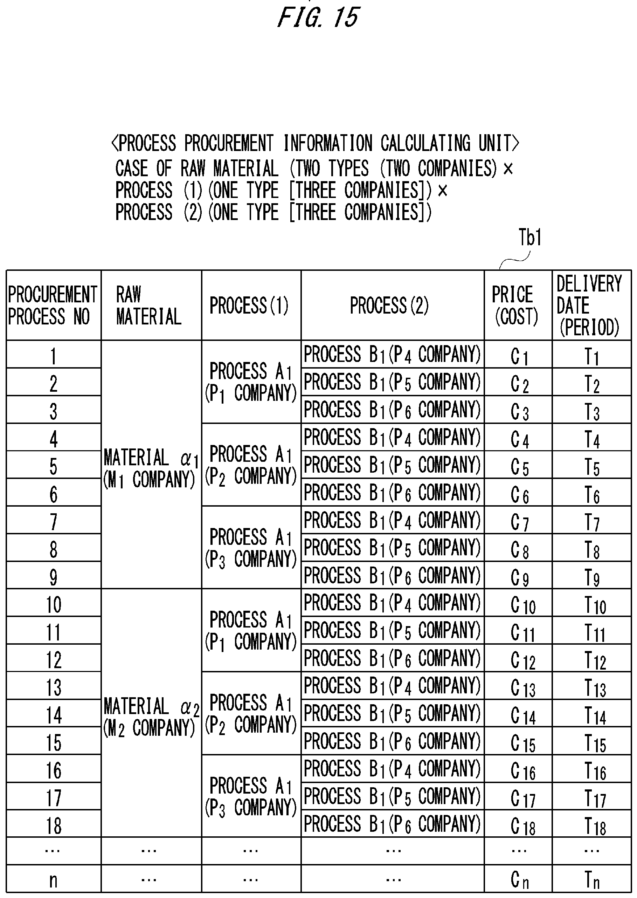

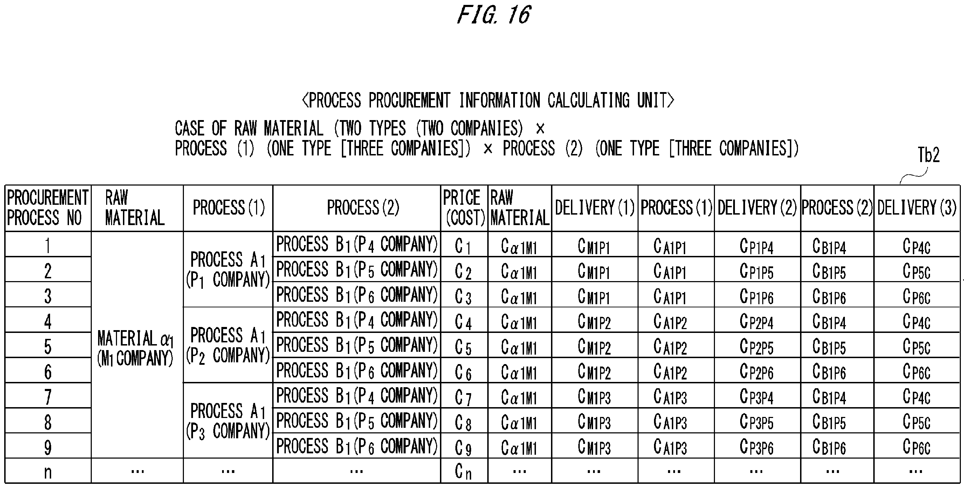

FIGS. 15 and 16 are diagrams each illustrating one example of the component procurement assistance table. The component procurement assistance table Tb1 illustrated in FIG. 15 is an example of a case in which two types of material groups exist for the procurement candidate materials, three process facilities exist for the process A1, and three process facilities exist for the process B1. The component procurement assistance table Tb1 has a record for every procurement process. Note that the procurement process represents a combination of the components (material) of the raw material that are contained in the correlation table and one or more process elements in the manufacturing process, and an identification number for identifying the combination described above is expressed as "procurement process No".

In the component procurement assistance table Tb1 in FIG. 15, the two types of materials constituting the raw material are "material α1" provided by the material maker "M1 company" and "material α2" provided by the material maker "M2 company". The process facilities to provide the process elements of the process A1 are "P1 company", "P2 company" and "P3 company"; and the process facilities to provide the process elements of the process B1 are "P4 company", "P5". Company" and "P6 company".

As illustrated in the component procurement assistance table Tb1, the cost and delivery date calculated by the process procurement information calculating unit 104 are stored per record identified by "procurement process No". For example, in the record with "6" as the "procurement process number", the raw material constituting the component is "material α1" provided by the material manufacturer "M1 company", and the process facility to provide the process elements of the process A1 is "P2 company". In the same record, the processing institution that provides the process elements of the process B1 is "P6 company"; the price (cost) concerning the procurement of component is "C6"; and the procurement delivery date (period) is "T6".

Similarly, in the record with "18" being given as the "procurement process number" in the component procurement assistance table Tb1, the raw material constituting the component is "material α2" provided by the material maker "M2 company"; and the process facility to provide the process elements of the process A1 is "P3 company". In the same record, the process facility to provide the process elements of the process B1 is "P6 company"; the price (cost) concerning the procurement of component is "C18"; and the procurement delivery date (period) is "T18".

The component procurement assistance table Tb2 illustrated in FIG. 16 is an example of a case in which two types of material groups exist for the procurement candidate materials, three process facilities exist for the process A1, and three process facilities exist for the processB1. The component procurement assistance table Tb2 has a record per procurement process. However, in the component procurement assistance table Tb2, within the two types of materials constituting the raw material, "material α1" provided by the material maker "M1 company" is exemplified, while the other material is omitted. In the component procurement assistance table Tb2, itemization of costs is given, while the delivery date is omitted.

In the component procurement assistance table Tb2, "raw material", "delivery (1)", "process (1)", "delivery (2)", "process (2)" and "delivery (3)" respectively correspond to the itemization of the cost explained by using FIG. 11. For instance, in the record with "6" as the "procurement process number", the raw material constituting the component is "material α1" provided by the material maker "M1 company", and the process facility to provide the process elements of the process A1 is "P2 company". In the same record, the process facility to provide the process elements of the process B1 is "P6 company", and the price (cost) concerning the procurement of component is "C6".

The itemization of the cost "C6" concerning the procurement of component is that: "raw material" is "Cα1M1"; "delivery (1)" is "CM1P2"; "process (1)" is "CA1P2"; "delivery (2)" is "CP2P6"; "process (2)" is "CB1P6"; and "delivery (3)" is "CP6C".

The process procurement information calculating unit 104 hands over, to the input/output unit 101, the component procurement assistance table in which the cost and the estimated delivery date per procurement candidate are stored.

### (Input/Output Unit: Output Process)

Based on the information per procurement process that is stored in the component procurement assistance table per procurement candidate, the table being handed over from the process procurement information calculating unit 104, the input/output unit 101 outputs the cost and the delivery date associated with the specification information of the accepted component to the component user terminal 20 in a predetermined form. The cost and the delivery date associated with the specification information of the accepted component are presented to the component user via the display screen of the LCD and other equivalent displays equipped in the component user terminal 20.

As the outputting form of the input/output unit 101, for example, the information per procurement process that is stored in the component procurement assistance table Tb1 per procurement candidate illustrated in FIG. 15 can be presented in the list format. The input/output unit 101 may sort the procurement candidates in the sequence from the highest coincidence to the lowest coincidence with the specification information of the accepted component, and may present the information per procurement process that is stored in the component procurement assistance table Tb1 in the list format.

Note that the input/output unit 101 may narrow down specific items from the component procurement assistance table per procurement candidate, and may present information of the selected procurement process as a component procurement plan. Exemplified, e.g., are a component procurement plan with priority being given to the performance, a component procurement plan with the priority being given to the cost, and a component procurement plan with the priority being given to the delivery date. With respect to each procurement plan, the input/output unit 101 sorts the procurement candidates in the sequences from the highest performance (past record of the transactions) to the lowest performance, from the lowest cost to the highest cost, and from the shortest delivery date for the longest delivery date, thereby enabling presentation of the list-formatted information per procurement process that is stored in the component procurement assistance table Tb1. The input/output unit 101 may also present the respective priority plans as a plurality of options in parallel with the information of the highest-ranked procurement process.

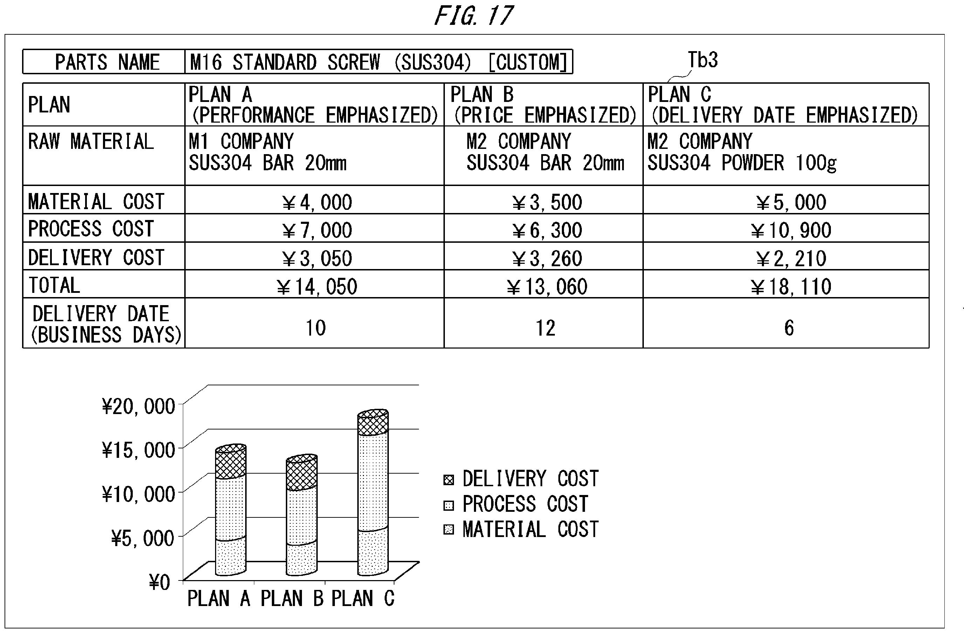

FIG. 17 is a diagram illustrating one example of a form in which to present the plurality of component procurement plans as options. A plan A with the priority (emphasis) being given to the performance, a plan B with the priority (emphasis) being given to the cost, and a plan C with the priority (emphasis) being given to the delivery date are presented in parallel in a component procurement plan table Tb3 illustrated in FIG. 17. Note that the component (parts name) becoming the procurement target is "M16 standard screw (SUS304) [custom]" in the component procurement plan table Tb3. Herein, "custom" represents an addition of the process option, and the example in FIG. 17 indicates the component having no addition of the process option.

The input/output unit 101 extracts, e.g., the raw material information and the process facility information from the component procurement assistance table per procurement candidate, and searches for the past record information accumulated in the raw material process DS 110 on the basis of the extracted information. The input/output unit 101 extracts, for example, a past record frequency (number of times) of how many times the raw material is purchased per raw material information, and a past record frequency (number of times) of the processing per process facility from the searched past record information. The input/output unit 101 performs a relative comparison of the extracted past record frequencies, thereby specifying the purchase raw material and the process facility, which each exhibit the highest past record frequency (the largest transaction past record count). Note that the input/output unit 101 may also weight the extracted past record frequency, corresponding to an amount of money of the transaction past record. The input/output unit 101 presents, as a plan A, the information of the record containing the purchase raw material and the process facility, which each exhibit the high past record frequency from the component procurement assistance table per procurement candidate.

Similarly, the input/output unit 101 extracts, for example, the record with the lowest cost from the component procurement assistance table per procurement candidate, and presents the information of the extracted record as a plan B. The input/output unit 101 extracts, e.g., the record with the shortest delivery date from the component procurement assistance table per procurement candidate, and presents the information of the extracted record as a plan C.

In the component procurement plan table Tb3, the maker, the name and dimensions of the material purchased in each plan are stored in a "raw material" column. The raw material purchase cost presented in each plan is stored in a "material cost" column. The process cost presented in each plan is stored in a "process cost" column. The delivery cost presented in each plan is stored in a "delivery cost" column. The component procurement cost presented in each plan is stored in a "total" column. The delivery date concerning the procurement of component, which is presented in each plan, is stored in a "delivery date (business day)" column.

In the form of the component procurement plan table Tb3 illustrated in FIG. 17, the component user receiving the presentation of the plurality of component procurement plans makes the relative comparison of the information contents presented in the respective plans, and selects a desired component procurement plan, thereby enabling the component user to determine the arrangement of the component procurement.

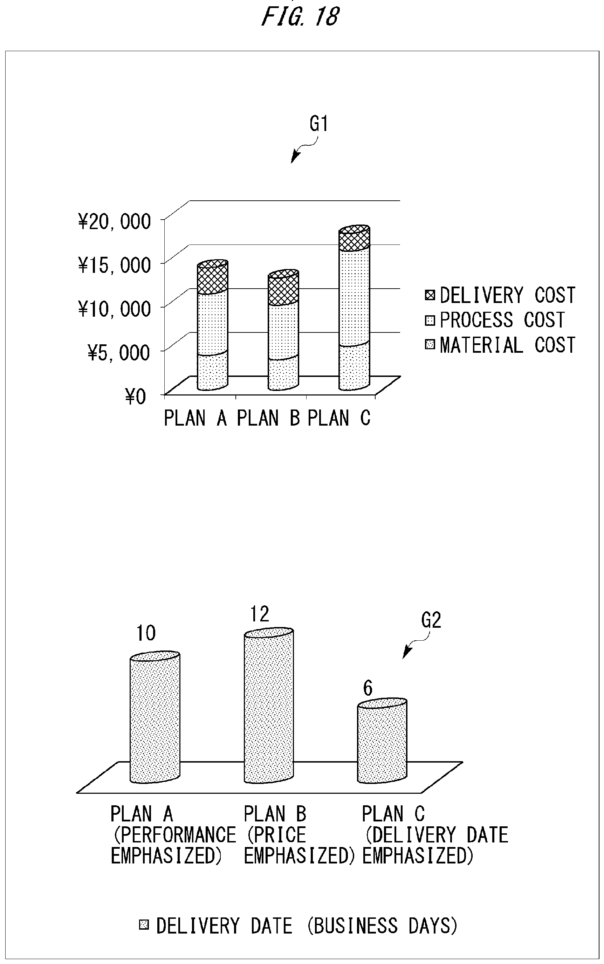

Note that the input/output unit 101 may present a graph in which to visualize the cost and the delivery date of each plan arranged in parallel in addition to the component procurement plan table Tb3 illustrated in FIG. 17. FIG. 18 is a diagram illustrating one example of a graph in which to visualize the cost and the delivery date of each plan arranged in parallel with the component procurement plan table Tb3.

In G1 of FIG. 18, the costs of a plan A, a plan B, and a plan C are visualized together with the itemization (material cost, process cost, delivery cost) . The delivery dates of the plan A, the plan B, and the plan C are visualized in G2 of FIG. 18. The component user is therefore enabled to relatively visually recognize and compare the costs and delivery dates of the respective plans arranged in parallel with the component procurement plan table Tb3 in the visualized form.

The component user, for example, relatively compares the presented costs and delivery date information per procurement process, and makes a request for creating the estimation by designating the above information conforming with the cost conditions and the delivery date conditions closely matching with the purpose. The input/output unit 101 accepts the request for creating the estimation from the component user, and creates the estimation (written estimate) for the designated procurementprocess information.

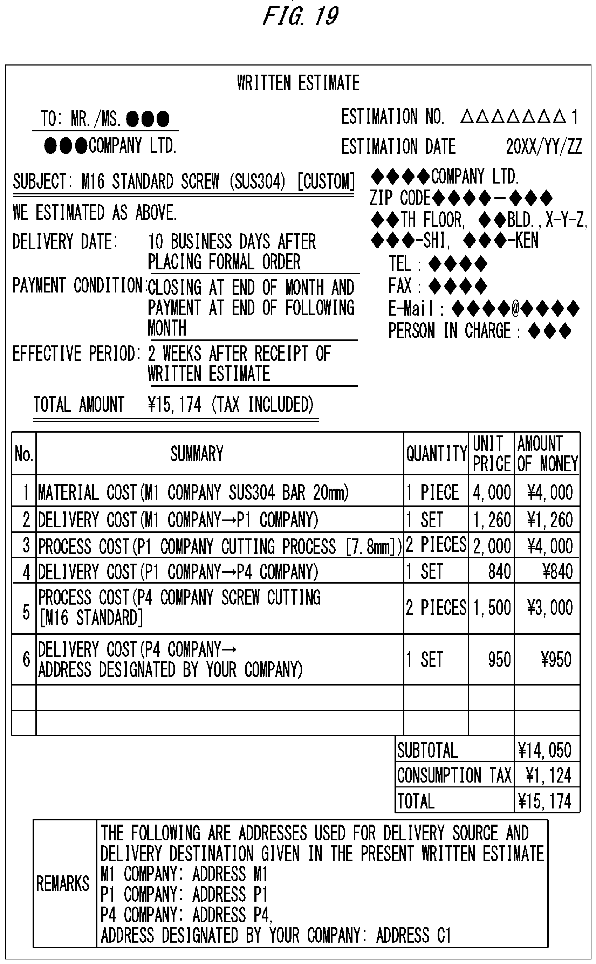

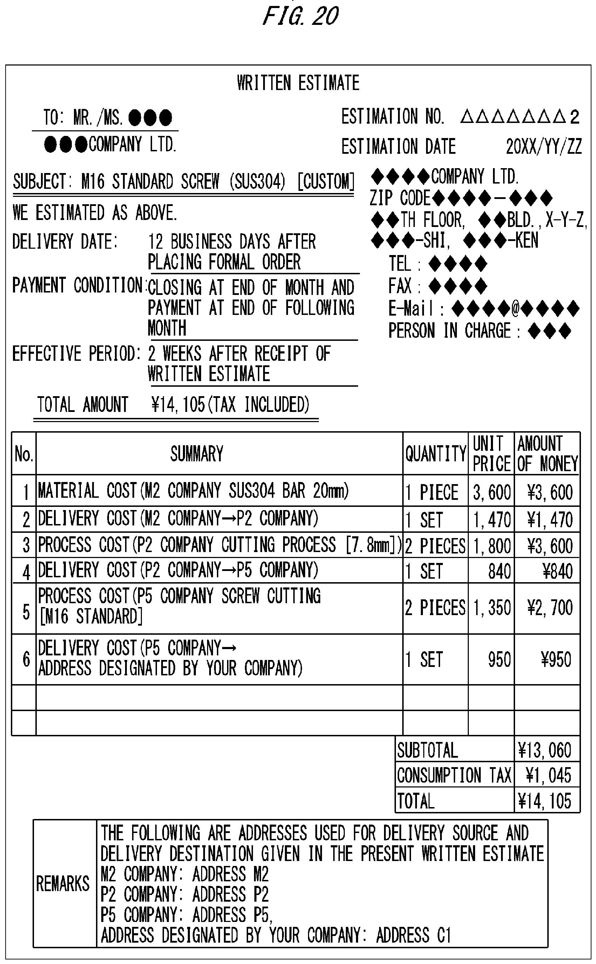

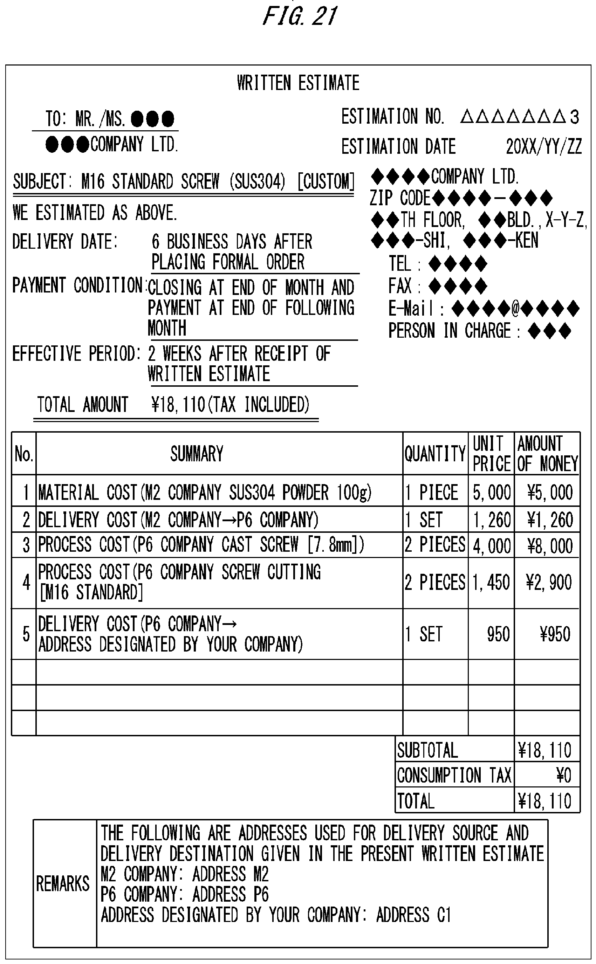

FIGS. 19 through 21 are diagrams each illustrating one example of the written estimate. FIG. 19 depicts the written estimate corresponding to the plan A in the component procurement plan table Tb3 described by using FIG. 17. Similarly, FIG. 20 depicts the written estimate corresponding to the plan B in the component procurement plan table Tb3. FIG. 21 depicts the written estimate corresponding to the plan C in the component procurement plan table Tb3.

Note that when creating the written estimate, for example, a template (template) of the written estimate illustrated in FIGS. 19 through 21 retained beforehand in the auxiliary storage device 213 of the procurement assistance server 10. It may be sufficient that the input/output unit 101 describes the items necessary for creating the written estimate with reference to the template of the of the written estimate retained in the auxiliary storage device 213.

The name of the component user (name of company, person in charge) making the request for creating the written estimate is described as the destination in the written estimate illustrated in FIG. 19. The parts name given in the component procurement plan table Tb3 and the delivery date of the plan A are described as "subject name" and "delivery date" of the written estimate, respectively. Items of procurement process information corresponding to the plan A of the component procurement plan table Tb3 are described as "summary", "quantity", "unit price", and "amount of money". Note that the addresses and other equivalent items of the delivery source and the delivery destination of the component used for calculating the delivery cost of Plan A are described in "remarks".

In the written estimate illustrated in FIG. 20, the parts name and the delivery date of the plan B given in the component procurement plan table Tb3 are described as "subject name" and "delivery date" of the written estimate, respectively. Items of procurement process information corresponding to the plan B of the component procurement plan table Tb3 are described as "summary", "quantity", "unit price", and "amount of money". The addresses and other equivalent items of the delivery source and the delivery destination of the component used for calculating the delivery cost of plan B are described in "remarks".

Also in the written estimate illustrated in FIG. 21, the parts name and the delivery date of plan C given in the component procurement plan table Tb3 are described as "subject name" and "delivery date" of the written estimate, respectively. The items of procurement process information corresponding to the plan C of the component procurement plan table Tb3 are described as "summary", "quantity", "unit price", and "amount of money". The addresses and other equivalent items of the delivery source and the delivery destination of the component used for calculating the delivery cost of plan C are described in "remarks".

The input/output unit 101 outputs the created written estimate to the component user terminal 20. The written estimate outputted in, e.g., an HTML (HyperText Markup Language) format or a PDF (Portable Document Format) format. The written estimates illustrated in FIGS. 19 through 21 are presented to the component user via the display screen of the LCD and other equivalent displays equipped in the component user terminal 20.

The component user is thus enabled to obtain competitive quotes with respect to the plurality of procurement candidates concerning the procurement of component. The procurement assistance server 10 is enabled to provide a one-stop service for assisting the determination about the selections and the arrangements for the plurality of related traders concerning the procurement of components.

### <4. Processing Flow>

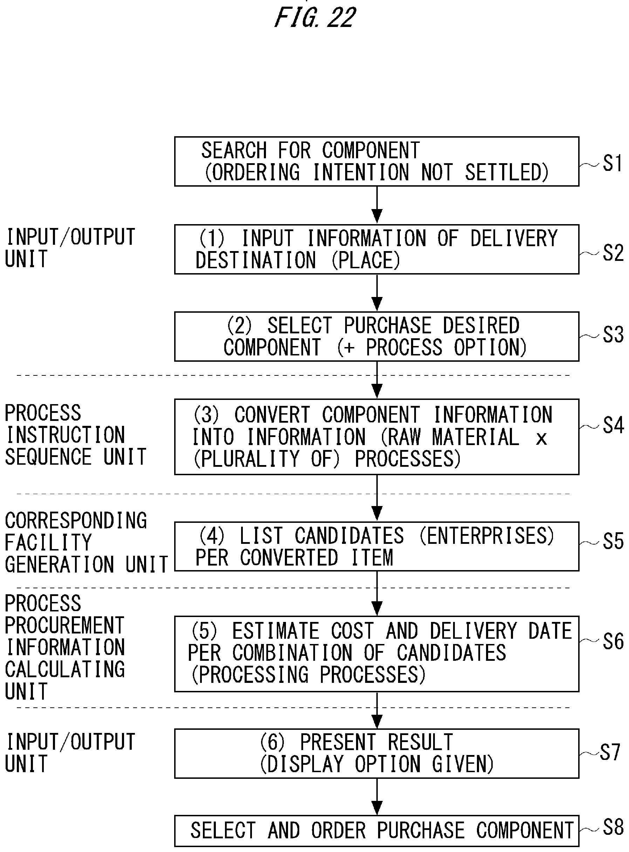

Next, a component procurement assistance process according to the embodiment will be described with reference to FIG. 22. FIG. 22 is a flowchart illustrating one example of the procurement assistance process for components provided via the procurement assistance server 10. The CPU 211 or other equivalent processor reads and executes the various categories of programs and the various items of data stored in the auxiliary storage device 213 and the information stored in the raw material process DS 110, whereby the procurement assistance server 10 according to the embodiment provides processes illustrated in FIG. 22.

In the flowchart of FIG. 22, the procurement assistance server 10 accepts a component search request from the component user terminal 20 (S1). The procurement assistance server 10 accepts the information of the component delivery destination (component carrying-in place) via the input screen concerning the procurement of component displayed on the LCD or other equivalent display of the component user terminal 20 (S2). The procurement assistance server 10 accepts the specification information (selection of purchase desired component (+ process option)) of the procurement target component that is inputted via the component user terminal 20 (S3) . The procurement assistance server 10 temporarily stores, in a predetermined area of the main storage device 212, the delivery destination information of the component accepted in the process of S2 and the specification information of the procurement target component accepted in the process of S3 by associating these items of information with each other.

The procurement assistance server 10 converts the component specification information (component information) accepted in the process of S3 into information (raw material and plural process elements) constituting the component (S4). Specifically, the procurement assistance server 10 refers to the raw material information and the process information stored in the raw material process DB 110, and thus generates a combination of (raw material + process) that satisfies the component specification information as the procurement candidate list. Note that the process of S4 executed by the procurement assistance server 10 has been described by using FIGS. 3 through 7. The procurement assistance server 10 hands over the generated procurement candidate list to a process of S5.

The procurement assistance server 10 lists trader candidates (enterprises) capable of providing the raw materials per item (rawmaterial, process element) contained in the information converted in the process of S4 (S5). Specifically, the procurement assistance server 10 refers to the raw material information and the facility information stored in the raw material process DB 110, and thus specifies the corresponding facility (providing maker) capable of providing the raw materials given in the procurement candidate list, and the corresponding facility (process facility) capable of corresponding to (dealing with) the respective process elements in the course of the process performed on the raw material. The procurement assistance server 10 generates the correlation table in which to combine the specified raw material providing maker with the process facility to apply each process element in the course of the process to the raw material. The correlation table is generated per procurement candidate described in the procurement candidate list. Note that the process of S5 executed by the procurement assistance server 10 has been described by using FIGS. 8 through 10. The procurement assistance server 10 hands over the correlation table generated per procurement candidate to a process of S6.

The procurement assistance server 10 estimates the cost and the delivery date for each candidate combination (processing process) listed in the process of S5 (S6). In the procurement assistance server 10, a component procurement assistance table is generated as a result of the process of S6. Note that the process of S6 executed by the procurement assistance server 10 has been described by using FIGS. 11 through 16. The procurement assistance server 10 hands over the component procurement assistance table generated as a result of the process of S6 to a process of S7.

The procurement assistance server 10 presents the estimation of the cost and the delivery date based on the specification information of the procurement target component accepted in the process of S3 to the component user terminal 20 (S7). Note that the process of S7 executed by the procurement assistance server 10 has been described by using FIGS. 17 through 21.

The component user selects, based on the estimation information of the cost and the delivery date presented in the process of S7, the procurement target component, and places an order for purchasing the component. The procurement assistance server 10 accepts the selection and the ordering of the procurement target purchase component, which is inputted via the component user terminal 20 (S8). After the process of S8, the processing illustrated in FIG. 22 is finished.

As discussed above, the procurement assistance server 10 refers to the raw material information and the process information stored in the raw material process DS 110, and generates the combination (raw material + process) satisfying the component specification information as the procurement candidate list. The procurement assistance server 10 refers to the raw material information the facility information stored in the raw material process DB 110, and thus specifies the corresponding facility (providing maker) capable of providing the raw materials given in the procurement candidate list and the corresponding facility (process facility) capable of corresponding to (dealing with) each process element in the course of the process performed on the raw material. The procurement assistance server 10 generates the correlation table in which to combine the specified providing maker of the raw material with the process facility that applies each process element in the course of the process to the raw material per procurement candidate described in the procurement candidate list. The procurement assistance server 10 is thereby enabled to present the cost and the delivery date estimated based on each combination given in the correlation table to the component user.

The component user is enabled to acquire the competitive quotes with respect to the plurality of procurement candidates concerning the procurement of presented components. The procurement assistance server 10 is capable of providing the one-stop service for assisting the determination about the selections and the arrangements of the plurality of related traders concerning the procurement of components. The procurement assistance server 10 according to the embodiment is capable of providing the technology enabling the assistance of the determination about the selections and the arrangements of the related traders concerning the procurement of components.

In presenting the estimation of the cost and the delivery date, the procurement assistance server 10 is capable of presenting, as the procurement plan, the list of the procurement processes sorted corresponding to, e.g., how much the transaction past record count is large or small. The component user selects the related trader (rawmaterial, process facility) having a large amount of transaction past records from within the presented procurement plan, and is enabled to determine the arrangements for procuring the component.

Similarly, the procurement assistance server 10 is capable of presenting, as the procurement plan, each list of the procurements sorted in the sequences from, e.g., the shortest delivery date to the longest delivery date, and from the lowest cost to the highest cost. The component user selects the related trader capable of the procurement by giving the priority to the delivery date or giving the priority to the cost from within the presented procurement plans, and is enabled to determine the arrangements for procuring the component for the selected related trader.

Note that the procurement assistance server 10 may also present, e.g., such selection options as to arrange in parallel the procurement plan of the related trader being highest-ranked in terms of the transaction past record count, the procurement plan of the related trader exhibiting the shortest delivery date, and the procurement plan of the related trader exhibiting the lowest cost. The component user is enabled to relatively compare the information contents (transaction past record, delivery date, cost) presented in each plan. The component user selects, for example, a desired procurement plan from within the presented procurement plans, and is thereby enabled to determine the arrangements for procuring the component.

The procurement assistance server 10 according to the embodiment enables the presentation of the estimations of the costs and the delivery dates by combining the raw material (material) maker with the process facility, which are capable of corresponding to the variety of production forms such as making the products on a small rod basis and making the products upon order. The component user is enabled to procure the component with the desired specification, the desired delivery date and the desired cost on the basis of the presented estimation information. The component user is further enabled to procure the component with a combination of the desired conditions in a way that changes the specifications of the component, the procurement delivery date of the component and the cost of the component with reference to the presented estimation.

### <Non-Transitory Computer Readable Recording Medium>

A program making a computer, other machines and apparatuses (which will hereinafter be referred to as the computer and other equivalent apparatuses) attain any one of the functions, can be recorded on a non-transitory recording medium readable by the computer and other equivalent apparatuses. The computer and other equivalent apparatuses are made to read and run the program on this non-transitory recording medium, whereby the function thereof can be provided.

Herein, the non-transitory recording medium readable by the computer and other equivalent apparatuses connotes a non-transitory recording medium capable of accumulating information instanced by data, programs and other equivalent information electrically, magnetically, optically, mechanically or by chemical action, which can be read from the computer and other equivalent apparatuses. Among these non-transitory recording mediums, the mediums removable from the computer and other equivalent apparatuses are exemplified by a flexible disc, a magneto-optic disc, a CD-ROM, a CD-R/W, a DVD, a Blu-ray disc, a DAT, an 8 mm tape, and a memory card like a flash memory. A hard disc, a ROM (Read-Only Memory) and other equivalent recording mediums are given as the non-transitory recording mediums fixed within the computer and other equivalent apparatuses.

### [Brief Description of the Reference Numerals and Symbols]

- 10: procurement assistance server
- 20: component user terminal
- 30, 30a, 30b, 30c: raw material maker terminal
- 40, 40a, 40b, 40c: process facility terminal
- 50, 50a, 50b: logistics company terminal
- 100: component procurement assistance system
- 101: input/output unit
- 102: process instruction sequence unit
- 103: corresponding facility generation unit
- 104: process procurement information calculating unit
- 110: raw material process database (DB)
- 200: computer
- 211: CPU
- 212: main storage device
- 213: auxiliary storage device
- 214: communication IF
- 215: input/output IF
- 216: connection bus

## Claims

1. A component procurement assistance system comprising:
storage means to store at least information for specifying a component, information for specifying a material of the component, process information for specifying a processing process to process the material into the component by one or more process elements, information of a material providing facility to provide the material of the component, information of a process providing facility to make feasible a process element contained in the processing process, and transaction past record information of the component;
means to accept a specification condition of a procurement target component;
means to acquire plural types of processing processes of processing a material satisfying the specification condition of the procurement component into the procurement component as manufacturing process candidates from the process information;
means to specify the material providing facility to provide the material and the process providing facility to make feasible the process element by being associated with respective process elements contained in the plural types of acquired manufacturing process candidates, based on the material providing facility information and the process providing facility information;
means to estimate a delivery date of the procurement component and cost information per plural types of manufacturing process candidates, based on the delivery date and the cost information set in the material providing facility of the material and the delivery date and the cost information set in the process providing facility per the process elements; and
presenting means to present the delivery date and the cost information of the procurement component, the delivery date and the cost information being estimated per the plural types of manufacturing process candidates.

2. The component procurement assistance system according to claim 1, wherein the presenting means acquires at least a transaction past record count of the process providing facility per process element contained in the plural types of manufacturing process candidates from the transaction past record information, sorts the process providing facilities in the sequence from the largest transaction past record count acquired therefrom, and presents the delivery date and the cost information of each manufacturing process candidate.

3. The component procurement assistance system according to claim 1 or 2, wherein the presenting means sorts the plural types of manufacturing process candidates in the sequence from the shortest delivery date from within the procurement component delivery date and the procurement component cost information estimated per plural types of manufacturing process candidates, and presents the delivery date and the cost information of each manufacturing process candidate.

4. The component procurement assistance system according to claim 1 or 2, wherein the presenting means sorts the plural types of manufacturing process candidates in the sequence from the lowest cost from within the procurement component delivery date and the procurement component cost information estimated per plural types of manufacturing process candidates, and presents the delivery date and the cost information of each manufacturing process candidate.

5. The component procurement assistance system according to claim 1 or 2, wherein the presenting means acquires at least the transaction past record count per process element contained in the plural types of manufacturing process candidates from the transaction past record information stored in the storage means, and presents in parallel the delivery date and the cost information of the manufacturing process candidate with the largest transaction past record count acquired therefrom, the delivery date and the cost information of the manufacturing process candidate with the shortest delivery date from within the procurement component delivery date and the procurement component cost information estimated per plural types of manufacturing process candidates, and the delivery date and the cost information of the manufacturing process candidate with the lowest cost from within the procurement component delivery date and the procurement component cost information estimated per plural types of manufacturing process candidates.

6. A component procurement assistance method by which a computer including storage means to store at least information for specifying a component, information for specifying a material of the component, process information for specifying a processing process to process the material into the component by one or more process elements, information of a material providing facility to provide the material of the component, information of a process providing facility to make feasible a process element contained in the processing process, and transaction past record information of the component, executes :
a step of accepting a specification condition of a procurement target component;
a step of acquiring plural types of processing processes of processing a material satisfying the specification condition of the procurement component into the procurement component as manufacturing process candidates from the process information;
a step of specifying the material providing facility to provide the material and the process providing facility to make feasible the process element by being associated with respective process elements contained in the plural types of acquired manufacturing process candidates, based on the material providing facility information and the process providing facility information;
a step of estimating a delivery date of the procurement component and cost information per plural types of manufacturing process candidates, based on the delivery date and the cost information set in the material providing facility of the material and the delivery date and the cost information set in the process providing facility per the process elements; and
a presenting step of presenting the delivery date and the cost information of the procurement component, the delivery date and the cost information being estimated per the plural types of manufacturing process candidates.

7. A program to make a computer including storage means to store at least information for specifying a component, information for specifying a material of the component, process information for specifying a processing process to process the material into the component by one or more process elements, information of a material providing facility to provide the material of the component, information of a process providing facility to make feasible a process element contained in the processing process, and transaction past record information of the component, execute:
a step of accepting a specification condition of a procurement target component;
a step of acquiring plural types of processing processes of processing a material satisfying the specification condition of the procurement component into the procurement component as manufacturing process candidates from the process information;
a step of specifying the material providing facility to provide the material and the process providing facility to make feasible the process element by being associated with respective process elements contained in the plural types of acquired manufacturing process candidates, based on the material providing facility information and the process providing facility information;
a step of estimating a delivery date of the procurement component and cost information per plural types of manufacturing process candidates, based on the delivery date and the cost information set in the material providing facility of the material and the delivery date and the cost information set in the process providing facility per the process elements; and
a presenting step of presenting the delivery date and the cost information of the procurement component, the delivery date and the cost information being estimated per the plural types of manufacturing process candidates.
